(19) Europäisches Patentamt
European Patent Office
Office européen des brevets

(11) Veröffentlichungsnummer: **0 193 808 B1**

(12) **EUROPÄISCHE PATENTSCHRIFT**

(45) Veröffentlichungstag der Patentschrift: **24.11.93**

(21) Anmeldenummer: **86102256.4**

(22) Anmeldetag: **21.02.86**

Die Akte enthält technische Angaben, die nach dem Eingang der Anmeldung eingereicht wurden und die nicht in dieser Patentschrift enthalten sind.

(51) Int. Cl.5: **C08G 18/40**, C08G 18/61, C08G 18/12, D06N 3/14, C14C 11/00, C08G 18/38, C08G 18/65

# (54) PU-Kunststoffe enthaltende Streichpasten und Verfahren zur Herstellung von wasserdampfdurchlässigen Polyurethan-Beschichtungen.

(30) Priorität: **02.03.85 DE 3507467**
**22.06.85 DE 3522464**

(43) Veröffentlichungstag der Anmeldung:
**10.09.86 Patentblatt 86/37**

(45) Bekanntmachung des Hinweises auf die Patenterteilung:
**24.11.93 Patentblatt 93/47**

(84) Benannte Vertragsstaaten:
**AT BE CH DE FR GB IT LI NL SE**

(56) Entgegenhaltungen:
**EP-A- 0 073 389**
**DE-A- 2 004 276**
**FR-A- 2 243 224**
**US-A- 4 098 742**
**DE-A- 1 694 059**
**DE-A- 3 231 062**
**US-A- 3 551 830**

(73) Patentinhaber: **BAYER AG**

**D-51368 Leverkusen(DE)**

(72) Erfinder: **Nachtkamp, Klaus, Dr.**
**c/o Mobay Chemical Corp.**
**New Martinsville W.Va. 26155(US)**
Erfinder: **Thoma, Wilhelm, Dr.**
**Birkenweg 25**
**D-5090 Leverkusen 3(DE)**
Erfinder: **Pedain, Josef, Dr.**
**Haferkamp 6**
**D-5000 Köln 80(DE)**
Erfinder: **Schröer, Walter, Dr.**
**Nicolai-Hartmann-Strasse 29**
**D-5090 Leverkusen(DE)**
Erfinder: **Langel, Rolf**
**Hüscheider Strasse 85**
**D-5090 Leverkusen 3(DE)**

EP 0 193 808 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft spezielle PU-Kunststoffe enthaltende Streichpasten, sowie ein Verfahren zur Herstellung von wasserdampfdurchlässigen Beschichtungen auf Textil- oder Ledersubstraten im Direkt- oder Transferverfahren nach dem Prinzip der Verdampfungskoagulation unter Verwendung von bestimmte Polyurethan-Kunststoffe enthaltenden Streichpasten.

Textil- oder Lederbeschichtungen, die eine hohe Durchlässigkeit für Wasserdampf aufweisen und zugleich eine hohe Wasserdichtigkeit besitzen, sind, vor allem auf dem Bekleidungs- und Schuh-Sektor, von zunehmendem Interesse. Der Vorteil solchermaßen beschichteter Materialien ist, daß die daraus hergestellte Bekleidung einerseits optimal schützt, andererseits aber die Körperfeuchtigkeit in Form von Wasserdampf entweichen läßt. Diese Eigenschaften haben sowohl in gesundheitlicher und hygienischer Hinsicht als auch im Hinblick auf den Tragekomfort einen hohen Stellenwert.

Ein wichtiges Verfahren, mikroporöse und somit wasserdampfdurchlässige Beschichtungen zu erzeugen, ist das der sogenannten Badkoagulation, wie es z.B. in der DE-AS 1 270 276 und DE-AS 1 769 277 beschrieben ist. Dabei wird ein Substrat mit einem in einem organischen Lösungsmittel gelösten Polyurethan oder Polyurethanharnstoff beschichtet und das beschichtete Produkt in ein Bad aus einem mit dem Lösungsmittel mischbaren Nichtlösungsmitel (z.B. Wasser) geführt. Die Koagulation des Polyurethans erfolgt durch die Extraktion des Lösungsmittels durch den Nichtlöser.

Die Nachteile dieses Verfahrens bestehen darin, daß zur erforderlichen vollständigen Entfernung des Lösungsmittels sehr goße Mengen Nichtlöser benötigt werden, und daß das Verfahren viel Zeit in Anspruch nimmt. Außerdem sind zur Durchführung dieses Verfahrens wie auch zur Aufarbeitung der dabei anfallenden Lösungsmittel-/Nichtlösungsmittelgemische spezielle, relativ aufwendige Apparaturen erforderlich.

Es hat daher nicht an Versuchen gefehlt, wasserdampfdurchlässige Beschichtungen nach Art einer einfachen Direkt- oder Transferbeschichtung auf konventionellen Textilbeschichtungsmaschinen herzustellen. Die meisten dieser Versuche beschreiten den Weg der sog. Verdampfungskoagulation. Dieses Verfahren wird im Prinzip so durchgeführt, daß einem in einem flüchtigen Lösungsmittel gelösten Polymeren eine gewisse Menge eines weniger flüchtigen Nichtlösungsmittels beigemischt wird und die so entstandene Lösung, Dispersion oder Suspension auf ein Substrat gestrichen wird. Die Beschichtung wird durch schonendes Erhitzen getrocknet, wobei zunächst bevorzugt das flüchtige Lösungsmittel verdampft. Die Folge ist, daß das Polymere in der Schicht koaguliert und nach endgültiger Trocknung eine mikroporöse Struktur aufweist. Diese Verfahrensweise ist z.B. in DE-PS 1 694 059 beschrieben; dabei werden Polyurethane eingesetzt, die in flüchtigen organischen Lösungsmitteln, wie z.B. Tetrahydrofuran oder Methylethylketon kolloidal gelöst sind und mit organischen Nichtlösungsmitteln höherer Verdunstungszahl, wie z.B. Waschbenzin, vermischt werden. Eine ähnliche Verfahrensweise ist in der Schweizerischen Patentschrift 481 971 beschrieben, mit der Erweiterung, daß dort unter den, den Polymerlösungen zuzusetzenden Nichtlösungsmitteln auch Wasser genannt wird. Ein weiteres Beispiel dieser Art stellt das Verfahren gemäß DE-PS 2 004 276 dar. Hier werden hydrophile Polyurethane auf Basis aromatischer Diisocyanate eingesetzt, die bestimmte Anteile an Polyoxyethylenverbindungen als Aufbaukomponenten enthalten. Lösungen dieser Polyurethane in bestimmten organischen Lösungsmitteln, wie z.B. Methylethylketon, werden mit Wasser als Nichtlösungsmittel vermischt und auf ein Substrat aufgetragen, worauf die Beschichtung durch selektive Verdampfung koaguliert und anschließend getrocknet wird.

Die genannten, nach dem Prinzip der Verdampfungskoagulation arbeitenden Verfahren weisen jedoch noch schwerwiegende Mangel auf. Ein wesentlicher Nachteil besteht darin, daß die selektive Verdampfung der flüchtigeren Lösungsmittelanteile viel Zeit benötigt und einer äußerst genauen Temperaturführung bedarf. Die Handhabung der entsprechenden Produkte auf den Beschichtungsmaschinen ist daher kompliziert und vor allem nur mit langsamen Fahrgeschwindigkeiten möglich. Ein weiterer gravierender Nachteil, der insbesondere das erwähnte Verfahren gemäß DE-PS 2 004 276 betrifft, ist in der schwierigen Verarbeitbarkeit der dort beschriebenen Polyurethan-Lösungen bzw. -Suspensionen begründet. Obwohl der Festkörpergehalt niedrig ist, sind diese Produkte, sogar schon vor der erst zum Zeitpunkt der Applikation stattfindenden Wasserzugabe, hochviskos. Sie werden als "schlammartige Suspensionen" beschrieben, neigen stark zu vorzeitiger Antrocknung mit Bildung von Gelteilchen und Stippen und sind daher vom Beschichter schlecht handzuhaben. Darüber hinaus haben die Beschichtungen gemäß letztgenannter Patentschrift den Nachteil mangelnder Lichtechtheit.

Aufgabe der vorliegenden Erfindung war es daher, ein Verfahren zur Herstellung von wasserdampfdurchlässigen Beschichtungen zur Verfügung zu stellen, das auf herkömmlichen Beschichtungsmaschinen im Direkt- oder Transferverfahren durchgeführt werden kann und das die oben im einzelnen geschilderten Nachteile nicht aufweist.

Diese Aufgabe konnte durch die Bereitstellung der nachstehend naher beschriebenen, mehrphasigen, stabilen Streichpasten und ihre Verwendung im Beschichtungsverfahren nach dem Direkt- oder Transferverfahren nach dem Prinzip der Verdampfungskoagulation gelöst werden. Die Streichpasten können durch Vermischen der Komponenten A-G hergestellt werden.

Der Erfindung liegt die überraschende Beobachtung zugrunde, daß aus an sich hydrophoben Polyurethanen oder Polyurethanharnstoffen, die bestimmte, unten näher definierte Silicon-, Polyether-, Polyester- oder Perfluorcarbonharz-Segmente eingebaut enthalten und die in organischen Lösungsmitteln gelöst sind, besonders durch Zusatz von bestimmten, unten näher definierten Nicht-Polyurethanharzen mit seiten- oder endständigen Carboxylatgruppen und von bestimmten Mengen Wasser mehrphasige, stabile Streichpasten erhältlich sind, die sich in besonders einfacher, schneller und sicherer Weise auf herkömmlichen Beschichtungsmaschinen zu mikroporösen Beschichtungen verarbeiten lassen. Vorzugsweise handelt es sich bei den erfindungsgemäß einzusetzenden Basispolymeren um Polyurethanharnstoffe auf Basis aliphatischer Polyisocyanate, wodurch vorteilhaft lichtechte wasserdampfdurchlässige Beschichtungen resultieren.

Das erfindungsgemäße Verfahren hat den Vorteil, daß die Polyurethanlösungen vor Wasserzusatz niedrigviskos sind und insofern vom Beschichter, der daraus erst kurz vor Anwendung die gebrauchsfertigen Streichpasten herstellt, leicht und sicher zu handhaben sind. Darüber hinaus zeichnen sich die im erfindungsgemäßen Verfahren verwendeten Streichpasten, welche Carboxylatgruppen-haltiges Harz und Wasser enthalten, durch besonders gute Lagerstabilität und Verarbeitungssicherheit aus.

Gegenstand der vorliegenden Erfindung ist daher ein Verfahren zur Herstellung von wasserdampfdurchlässigen Beschichtungen auf Textil- oder Ledersubstraten im Direkt- oder Transferverfahren nach dem Prinzip der Verdampfungskoagulation unter Verwendung von Polyurethan-Kunststoffe enthaltenden, gegebenenfalls pigmentierten Streichpasten, dadurch gekennzeichnet,
daß als Streichpasten mehrphasige Gemische aus

A) mindestens 5 Gew.-%, vorzugsweise 5 - 50 Gew.-%, an an sich hydrophoben Polyurethanen und/oder Polyurethanharnstoffen mit weniger als 2 Gew.% Oxyethylensegmenten, die
1 - 30 Gew.-%, vorzugsweise 1 bis 20 Gew.-%, insbesondere 1,5 - 15 Gew.-% spezielle Aufbaukomponenten aus der Gruppe
der Siliconharze,
der aromatische Molekülsegmente enthaltenden Polyether mit weniger als 10 Gew.-% Oxyethylensegmenten,
der aromatischen Molekülsegmente enthaltenden Polyester und/oder
der Perfluorcarbonharze,
eingebaut enthalten,

B) 0 - 30 Gew.-% an sich hydrophoben Polyurehanen und/oder Polyurethanharnstoffen, die ohne die unter A) genannten speziellen Aufbaukomponenten hergestellt sind,

C) 4,5 - 50 Gew.-% organischen Lösungsmitteln für A) und B),

D) 0 - 40 Gew.-% organischen Nichtlösungsmitteln für A) und B),

E) 0-10 Gew.-%, bevorzugt 0,5-10 Gew.-%, besonders bevorzugt 0,5 - 5 Gew.-%, Polymeren, die frei von Urethan- und Harnstoffgruppen sind und seiten- und/oder endständig mit Basen ganz oder teilweise neutralisierte Carboxylgruppen tragen,

F) 10 - 70 Gew.-% Wasser und

G) 0 - 5 Gew.-%, Vernetzungsmitteln, Hydrophobierungsmitteln, Stabilisatoren gegen Verfärbung und Abbau, und/oder weiteren Beschichtungshilfsmitteln,

verwendet werden. (Die Summe der Prozentanteile A) bis G) soll sich dabei jeweils zu 100 addieren.)

Weiterer Erfindungsgegenstand sind die in Anspruch 10 definierten Streichpasten, welche erfindungsgemäß bevorzugt eingesetzt werden.

Die zur Durchführung des erfindungsgemäßen Verfahrens eingesetzten Streichpasten werden vorzugsweise so hergestellt, daß Lösungen der Polyurethane bzw. Polyurethanharnstoffe A) und gegebenenfalls B) in den organischen Lösungsmitteln C), gegebenenfalls unter Zusatz der organischen Nichtlösungsmittel D) und der Beschichtungshilfsmittel G), mit wäßrigen bzw. organischen Lösungen oder Dispersionen der ganz oder teilweise neutralisierte Carboxylgruppen tragenden Polymeren E) vermischt werden und dann gegebenenfalls noch der restliche Anteil des Wassers F) zugemischt wird.

Besonders bevorzugt handelt es sich bei den Komponenten A) und B) um Polyurethanharnstoffe auf der Basis aliphatischer Polyisocyanate.

Die Polyurethane bzw. Polyurethanharnstoffe A) sind in an sich bekannter Weise erhältliche Polyadditionsprodukte aus Polyisocyanaten und Verbindungen mit aktiven Wasserstoffatomen. Wesentliches Kennzeichen dieser Polymeren ist aber, daß sie hydrophob sind, d.h. ohne weitere Hilfsmittel keine stabilen Dispersionen oder Lösungen mit Wasser ergeben, und daß sie bestimmte Aufbaukomponenten aus der

Gruppe der Siliconharze, der aromatische Molekülsegmente enthaltenden Polyether, der aromatische Molekülsegmente enthaltenden Polyester und/oder der Perfluorcarbonharze eingebaut enthalten.

Ausgangsmaterialien zur Herstellung der Polyurethane bzw. Polyurethanharnstoffe A) sind

1.) beliebige organische Polyisocyanate, vorzugsweise Diisocyanate der Formel $Q(NCO)_2$, wobei Q insbesondere einen aliphatischen Kohlenwasserstoffrest mit 4 bis 12 Kohlenstoffatomen, einen cycloaliphatichen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Eine ausführliche Aufzählung geeigneter Diisocyanate kann z.B. den DE-OS 3 134 112, DE-OS 2 854 384 und DE-OS 2 920 501 entnommen werden.

Beispiele derartiger bevorzugt einzusetzender Diisocyanate sind Tetramethylendiisocyanat, Hexamethylendiisocyanat, 1-Methyl-1,5-diisocyanatopentan, 2-Methyl-pentandiisocyanat-2,5, 2-Ethylbutandiisocyanat-1,4, Dodecamethylendiisocyanat, 1,3- und 1,4-Diisocyanatocyclohexan, 1-Methyl-2,4- und -2,6-diisocyanato-cyclohexan, 3-Isocyanatomethyl-3,5,5-trimethylcyclohexyl-isocyanat (Isophorondiisocyanat), 4,4'-Diisocyanatodicyclohexylmethan, 4,4'-Diisocyanatodicyclohexylpropan-(2,2), Mono-, Bis-, Tris- oder Tetraalkyl-dicyclohexylmethan-4,4'-diisocyanate, Lysin-alkylesterdiisocyanate, Oligomere oder Homopolymere von m- oder p-Isopropenyl-$\alpha,\alpha$-dibenzyldiisocyanaten nach EP-A 130 313, 1-Alkyl-2-isocyanatomethyl-isocyanato-cyclohexane, 1-Alkyl-4-isocyanatomethyl-isocyanato-cyclohexane nach EP-A 128 382, 1,4-Diisocyanatobenzol, 2,4- oder 2,6-Diisocyanatotoluol, bzw. Gemische dieser Isomeren, 4,4'- und/oder 2,4'- und/oder 2,2'-Diisocyanatodiphenylmethan, 4,4'-Diisocyanatodiphenylpropan-(2,2), p-Xylylendiisocyanat und $\alpha,\alpha,\alpha',\alpha'$-Tetramethyl-m- oder -p-xylylendiisocyanat sowie aus diesen Verbindungen bestehende Gemische.

Besonders bevorzugt werden die genannten (cyclo)aliphatischen Diisocyanate eingesetzt.

Es ist selbstverständlich auch möglich, bei der Herstellung Polyurethan(harnstoff)e die in der Polyurethan-Chemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisenden Polyisocyanate (mit)zuverwenden.

2.) Wasserunlösliche Polyhydroxylverbindungen der in der Polyurethan-Chemie an sich bekannten Art mit Molekulargewichten über 400, beispielsweise 400 - 10 000, vorzugsweise von 500 - 5000 und Schmelzpunkten unter 60 °C, vorzugsweise unter 45 °C. Bevorzugt werden die entsprechenden Dihydroxyverbindungen eingesetzt. Die Mitverwendung von im Sinne der Isocyanat-Polyadditionsreaktion tri- oder höherfunktionellen Verbindungen in geringen Anteilen zur Erzielung eines gewissen Verzweigungsgrades ist ebenso möglich wie die bereits erwähnte, mögliche Mitverwendung von tri- oder höherfunktionellen Polyisocyanaten zum gleichen Zweck. Weiterhin ist es bevorzugt, daß die entsprechenden Polyhydroxylverbindungen überwiegend aus aliphatischen Aufbaukomponenten hergestellt sind.

Vorzugsweise einzusetzende Hydroxylverbindungen sind die in der Polyurethan-Chemie an sich bekannten Hydroxypolyester, Hydroxypolyether, Hydroxypolythioether, Hydroxypolycarbonate und/oder Hydroxypolyesteramide. Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren.

Werden drei- oder höherwertige Alkohole zur Herstellung der Polyester eingesetzt, so ist auch die (Mit-)Verwendung einwertiger Carbonsäuren möglich. Umgekehrt lassen sich bei Einsatz höherwertiger Carbonsäuren einwertige Alkohole (mit-)verwenden.

Anstelle der freien Polycarbonsäuren können auch die entsprechenden Polycarbonsäureanhydride oder entsprechende Polycarbonsäureester von niederen Alkoholen oder deren Gemische zur Herstellung der Polyester verwendet werden. Die Polycarbonsäuren sind vorzugsweise aliphatischer und/oder cycloaliphatischer Natur und können gegebenenfalls, z.B. durch Halogenatome, substituiert und/oder ungesättigt sein. Als Beispiele hierfür seien genannt:

Bernsteinsäure, Adipinsäure, Korksäure, Azelainsäure, Sebacinsäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren.

Gegebenenfalls (mit-)zuverwendende einwertige Carbonsäuren sind vorzugsweise gesättigte oder ungesättigte Fettsäuren, wie z.B. 2-Ethylhexansäure, Palmitinsäure, Stearinsäure, Ölsäure, Ricinolsäure, Linolsäure, Ricinensäure, Linolensäure sowie technische Fettsäure-Gemische, wie sie z.B. aus natürlichen Rohstoffen (z.B. Kokosfett, Leinöl, Sojaöl, Ricinusöl) gewonnen werden.

Als mehrwertige Alkohole kommen z.B. Ethylenglykol, Propandiol-(1,2) und -(1,3), Butandiol-(1,4), -(2,4) und/oder -(2,3), Hexandiol-(1,6), Octandiol-(1,8), Neopentylglykol, Cyclohexandimethanol (1,4-bis-hydroxymethyl-cyclohexan), 2-Methyl-1,3-propandiol, Glycerin, Trimethylolpropan, Hexantriol-(1,2,6),

Butantriol-(1,2,4), Trimethylolethan, Pentaerythrit, Chinit, Mannit und Sorbit, Methylglykosid, ferner Diethylenglykol, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. ε-Caprolacton oder Hydroxycarbonsäuren, z.B. ω-Hydroxycapronsäure, sind einsetzbar.

Auch die zur Herstellung der Polyurethan(harnstoff)e in Frage kommenden, vorzugsweise zwei Hydroxylgruppen aufweisenden Polyether sind solche der an sich bekannten Art und werden z.B. durch Polymerisation von Tetrahydrofuran oder Epoxiden wie Ethylenoxid, Propylenoxid, Butylenoxid, Styroloxid oder Epichlorhydrin mit sich selbst, z.B. in Gegenwart von $BF_3$ oder durch Anlagerung dieser Epoxide, gegebenenfalls im Gemisch oder nacheinander, an Startkomponenten mit reaktionsfähigen Wasserstoffatomen wie Alkohole und Amine, z.B. Wasser, Ethylenglykol oder Propylenglykol-(1,2) hergestellt.

Um das wesentliche Kennzeichen der Hydrophobie der erfindungsgemäß einzusetzenden Polyurethan(harnstoffe) zu gewährleisten, dürfen die als Aufbaukomponenten eingesetzten Polyether nur maximal so viel Ethylenoxideinheiten enthalten, daß die resultierenden Polyurethan(-harnstoffe) weniger als 2 Gew.-% an Oxyethylen-Segmenten $-CH_2-CH_2-O-$ enthalten. Vorzugsweise werden Ethylenoxid-freie Polyether zur Herstellung der erfindungsgemäßen Polyurethan(harnstoffe) eingesetzt.

Auch durch Vinylpolymerisate modifizierte Polyether, wie sie z.B. durch Polymerisation von Styrol, Acrylnitril in Gegenwart von Polyethern entstehen (US-PS 3 383 351, 3 304 273, 3 523 093, 3 110 695, DE-PS 1 152 536), sind geeignet. Die anteilig gegebenenfalls mitzuverwendenden höherfunktionellen Polyether entstehen in analoger Weise durch an sich bekannte Alkoxylierung von höherfunktionellen Startermolekülen z.B. Ammoniak, Ethanolamin, Ethylendiamin, Trimethylolpropan, Glycerin oder Sucrose.

Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt.

Als Hydroxxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), mit Diarylcarbonaten, z.B. Diphenylcarbonat oder Phosgen, hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate. Auch bereits Urethan- oder Harnstoffgruppen enthaltende Polyhydroxylverbindungen sind verwendbar.

Vertreter der genannten, zur Herstellung der hydrophoben Polyurethane A zu verwendenden Polyisocyanat- und Hydroxyl-Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32 - 42 und Seiten 44 - 54 und Band II, 1964, Seiten 5 - 6 und 198 - 199, sowie im Kunststoff-Handbuch, Band VII, Vieweg-Höchtlen, Carl-Hanser-Verlag, München, 1966, z.B. auf den Seiten 45 bis 71, beschrieben.

3.) Erfindungsgemäß sind bei der Herstellung der hydrophoben Polyurethan(harnstoff)e im Sinne der Isocyanat-Additionsreaktion mindestens difunktionelle Verbindungen aus der Gruppe der Siliconharze (3a), der aromatische Molekülsegmente enthaltenden Polyether (3b), der aromatische Molekülsegmente enthaltenden Polyester (3c) und/oder der Perfluorcarbonharze (3d) mitzuverwenden.

Im einzelnen handelt es sich dabei um 3a) Polysiloxan-Segmente enthaltende Verbindungen mit mindestens zwei end- und/oder seitenständigen, gegenüber Isocyanaten reaktionsfähigen Gruppen, mit Molekulargewichten von 194 - 20 000, vorzugsweise von 300 bis 3000. Bevorzugt werden difunktionelle Polysiloxane mit organofunktionellen Endgruppen eingesetzt. Diese Verbindungen weisen Struktureinheiten der Formel $-O-Si-(R)_2-$ auf, wobei R für einen $C_1$-$C_4$-Alkyl- oder einen Phenylrest, vorzugsweise jedoch für einen Methylrest, steht.

Erfindungsgemäß als Ausgangsmaterial geeignete organofunktionelle, lineare Polysiloxane sind beispielsweise in den DE-AS 1 114 632, 1 190 176, 1 248 287, 2 543 638 oder in den DE-OS 2 356 692, 2 445 648, 2 363 452, 2 427 273 oder 2 558 523 beschrieben. Die organofunktionellen Endgruppen stellen vorzugsweise aliphatische, gegebenenfalls Heteroatome wie insbesondere Sauerstoff enthaltende Kohlenwasserstoffreste dar, die eine Hydroxyl-, Carboxyl-, Mercapto- oder primäre bzw. sekundäre Aminogruppe oder Carbonsäurehydrazidgruppen aufweisen. Zu den bevorzugten carbofunktionellen Gruppen gehören primäre und sekundäre Hydroxylgruppen, sowie sekundäre Aminogruppen. Besonders bevorzugt sind solche Ausgangsverbindungen, die endständig primäre Hydroxylgruppen aufweisen. Die organofunktionellen Gruppen können in den Ausgangsmaterialien beispielsweise in Form folgender carbofunktioneller Reste vorliegen:

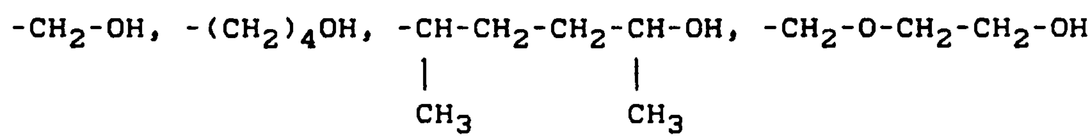

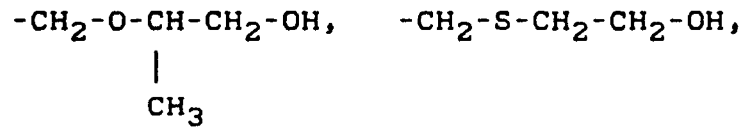

$-CH_2SH$, $-CH_2-S-CH_2-CH_2-SH$, $-CH_2-CH_2-COOH$, $-CH_2-NH_2$, $-(CH_2)_4NH_2$, $-CH_2-NH-C_4H_9$ oder $-CH_2-NH-C_6H_{11}$.

Die organofunktionellen Polysiloxane weisen mindestens 1, vorzugsweise 3 bis 30, Struktureinheiten der Formel $-O-Si(R)_2-$ (R ist vorzugsweise Methyl) bei einem Molekulargewicht von 194 bis 20 000, besonders bevorzugt zwischen 300 und 3000 auf.

Erfindungsgemäß als Ausgangsverbindungen besonders bevorzugt sind Hydroxymethyl-poly-dimethylsiloxane der allgemeinen Formel

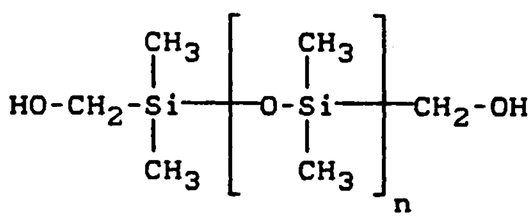

n = 3 bis 30,

wie sie in an sich bekannter Weise, z.B. nach dem Verfahren der DE-AS 1 236 505 hergestellt werden.

3b) Erfindungsgemäß werden in der Komponente A auch durch Oxalkylierung von aromatischen Verbindungen mit mindestens zwei phenolischen Hydroxylgruppen hergestellte, di- oder höherfunktionelle, vorzugsweise difunktionelle, hydroxyfunktionelle Polyether, die zu weniger als 10 Gew.-% aus Oxyethylen-Segmenten $-CH_2-CH_2-O-$ bestehen und Molgewichte von 226 bis 3000, vorzugsweise von 300 bis 2000 aufweisen, eingesetzt. Als Verbindungen mit mindestens zwei phenolischen Hydroxylgruppen zur Herstellung der erfindungsgemäß geeigneten aromatischen Polyether kommen z.B. Hydrochinon, die isomeren Naphthalindiole, vorzugsweise aber Diole der allgemeinen Formel

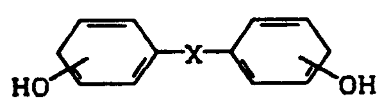

zur Anwendung.

In der letztgenannten Formel steht X für einen der zweiwertigen Reste -S-, -O-, $-SO_2-$, -CO- oder $-C(R_1R_2)-$ wobei $R_1$ und $R_2$ gleich oder verschieden sind und Wasserstoff oder $C_1$-$C_4$-Alkylreste darstellen, oder wobei sich $R_1$ und $R_2$ zu einem cycloaliphatischen Ring mit 5 oder 6 Kohlenstoffatomen schließen. Besonders bevorzugt sind solche Diole, in denen X für $-C(R)_2-$, ganz besonders bevorzugt solche, in denen X für $-C(CH_3)_2-$ steht.

Die erfindungsgemäß geeigneten aromatischen Hydroxypolyether werden in an sich bekannter Weise durch Polyaddition von cyclischen Ethern an die obengenannten aromatischen Polyole hergestellt. Als cyclische Ether kommen z.B. Ethylenoxid, Propylenoxid, Butylenoxid, Styroloxid oder auch Gemische dieser Verbindungen in Frage. Im Falle der (Mit-)Verwendung von Ethylenoxid dürfen nur solche Mengenanteile dieser Verbindungen eingesetzt werden, daß gemäß obengenannter Bedingung die resultierenden aromatischen Polyether weniger als 10 Gew.-% an Oxyethylen-Segmenten $-CH_2-CH_2-O-$ enthalten. Vorzugsweise wird ausschließlich Propylenoxid verwendet.

Als aromatische Hydroxylpolyether sind Addukte aus Bisphenol A und Propylenoxid ganz besonders bevorzugt.

Erfindungsgemäß können in den hydrophoben Polyurethanen A auch aromatische Molekülsegmente enthaltende Polyester, z.B.

3c) Polyester der isomeren Phthalsäuren mit mindestens zwei end- und/oder seitenständigen Hydroxylgruppen und Molekulargewichten von 250 bis 5000, vorzugsweise von 250 bis 2000 verwendet werden. Bevorzugt werden difunktionelle Polyester dieser Art eingesetzt. Es handelt sich dabei um an sich bekannte Kondensationsprodukte aus mehrwertigen, vorzugsweise zweiwertigen Alkoholen mit Phthalsäure, Isophthalsäure und/oder Terephthalsäure, wobei diese aromatischen Säuren gegebenenfalls auch, z.B. durch Halogenatome, substituiert sein können, Anstelle der freien Dicarbonsäuren können selbstverständlich auch die entsprechenden Carbonsäureester niederer Alkohole oder (im Falle der Phthalsäure) auch deren Anhydrid zur Herstellung der erfindungsgemäß geeigneten aromatischen Polyester eingesetzt werden.

Weiterhin können erfindungsgemäß in A auch

3d) Perfluoralkylgruppen enthaltende Verbindungen mit mindestens zwei end- und/oder seitenständigen, gegenüber Isocyanaten reaktionsfähigen Gruppen und Molekulargewichten von 250 - 5000, vorzugsweise von 300 bis 2000 verwendet werden. Bevorzugt werden Diole der genannten Art eingesetzt, die mindestens drei perfluorierte Kohlenstoffatome in Form von in die Hauptkette des Diols eingebauten und/oder seitenständig zu dieser angeordneten Perfluoralkylgruppen enthalten, wobei unter "Perfluoralkylgruppen" gesättigte, perfluorierte, aliphatische Radikale zu verstehen sind, die eine lineare, verzweigte oder auch cyclische Struktur aufweisen können. Besonders bevorzugt werden Diole der genannten Art mit seitenständigen Perfluoralkylgruppen eingesetzt, wie sie z.B. in der DE-OS 3 319 368 beschrieben sind. Beispiele für solche besonders gut geeigneten Aufbaukomponenten sind die N-Sulfonylperfluoralkyl-Aminoalkanolderivate der allgemeinen Formel:

$$C_nF_{2n+1}\text{-}SO_2\text{-}N(\text{-}X\text{-}OH)_2$$

worin

X für einen linearen oder verzweigten, gesättigten Alkylenrest mit 2 bis 4 Kohlenstoffatomen und

n für eine ganze Zahl größer als 2, vorzugsweise 5 bis 12 steht.

4.) Kettenverlängerungsmittel aus der Gruppe der Polyhydroxyl- und/oder der Polyaminoverbindungen und/oder der Hydroxyamino-Verbindungen mit Molekulargewichten bis zu 399.

Im einzelnen handelt es sich dabei um:

4a) Niedermolekulare, monomere und/oder oligomere Polyhydroxylverbindungen. Diese Polyole haben Molekulargewichte von 62 - 399 und umfassen Verbindungen wie z.B. Ethandiol, Propandiol-1,2 und -1,3, Butandiol-1,4, -2,3 und -1,3, Neopentylglykol, Hexandiol-1,6, 1,4,3,6-Dianhydrohexite, Trimethylolpropan, Glycerin und Pentaerythrit. Beispiele für oligomere Kettenverlängerer sind im Mittel difunktionelle Kondensationsprodukte aus den vorstehend genannten tri- oder tetrafunktionellen Alkoholen und monofunktionellen Carbonsäuren mit mittleren Molekulargewichten von 200 - 399. Als Carbonsäuren kommen dafür die schon vorstehend als mögliche Aufbaukomponenten der höhermolekularen Hydroxylpolyester genannten gesättigten und/oder ungesättigten Fettsäuren in Betracht.

4b) Polyamine und/oder Hydrazin und/oder Hydrazinderivate vom Molekulargewicht 32 sowie 60 bis 399, vorzugsweise 32 sowie 60 bis 300. Bei den Polyaminen handelt es sich vorzugsweise um aliphatische oder cycloaliphatische Diamine, obwohl gegebenenfalls auch anteilig tri- oder höherfunktionelle Polyamine zur Erzielung eines gewissen Verzweigungsgrades mitverwendet werden können. Beispiele geeigneter aliphatischer Polyamine sind Ethylendiamin, Trimethylendiamin, Tetramethylendiamin, Hexamethylendiamin, Propylendiamin-1,2, das Isomerengemisch von 2,2,4- und 2,4,4-Trimethylhexamethylendiamin und Bis-(2-aminoethyl)-amin (Diethylentriamin).

Beispiele geeigneter cycloaliphatischer Polyamine, die als einzelne Stereoisomere oder als beliebige Gemische von Stereoisomeren eingesetzt werden können, sind:

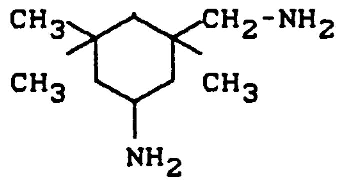

(Isophorondiamin)

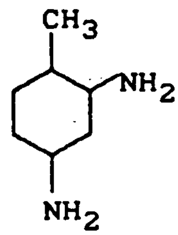

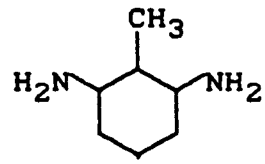

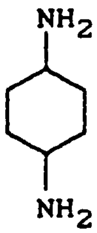

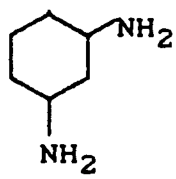

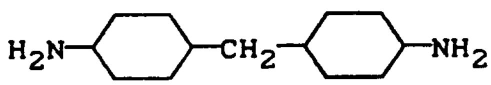

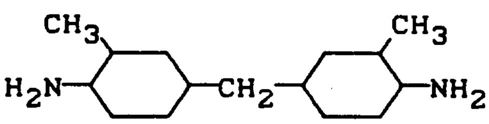

*)

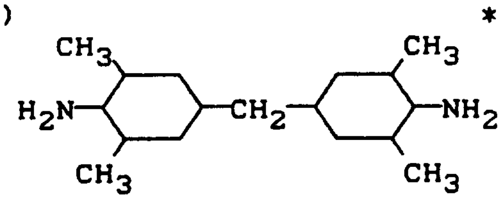

*)

*) anstelle der Methylgruppen können auch $C_2$-$C_4$-geradkettige oder verzweigte Alkylgruppen stehen,

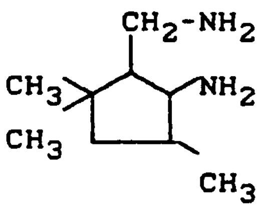

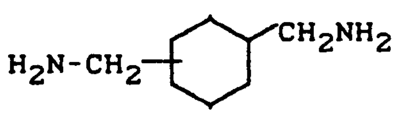

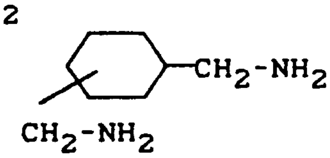

Auch araliphatische Polyamine, wie z.B. m- und p-Xylylendiamin sowie m- oder p-$\alpha$,$\alpha$',$\alpha$'-Tetramethylxylylendiamin lassen sich als Kettenverlängerungsmittel bei der Herstellung von Polyurethanharnstoffen A einsetzen.

Beispiele geeigneter hydrazinischer Kettenverlängerungsmittel sind: Hydrazin, welches vorzugsweise in Form seines Hydrates einzusetzen ist, und Hydrazinderivate mit mindestens zwei freien hydrazinischen Aminogruppen, wie z.B. Carbodihydrazid, Adipinsäuredihydrazid, Terephthalsäuredihydrazid oder $\beta$-Semicarbazido-propionsäurehydrazid.

5.) Einbaufähige, monofunktionelle Kettenabbrecher sind z.B. Oxime wie Alkanon- oder Cycloalkanonoxime, monofunktionelle Alkohole wie n- oder iso-Butanol, Stearylalkohol, monofunktionelle, primäre oder sekundäre Monoamine wie Butylamin, Di-n-butylamin oder Stearylamin oder Hydrazinderivate wie N,N-Dimethylhydrazin, Acethydrazid und Stearinsäuresemicarbazid. Einbaufähige Stabilisatoren sind z.B. N,N-Dimethyl-N'-hydroxyethylhydrazin, 4-Amino-2,2,6,6-tetramethylpiperidin, Bis-N,N-(3'-aminopropyl)-4-amino-1,2,2,6,6-pentamethylpiperidin oder 4-(2'-Hydroxyethyl)-2,5-di-tert.-butyl-hydrochinon.

Einbaufähige Vernetzer, Gleitmittel, Antiblockmittel, Mittel zur verbesserten Anfärbbarkeit sind z.B. N,N-Bis-(2'-hydroxyethyl)-stearylamin, tertiäre Aminogruppen enthaltende Diole wie N,N-Bis-(2'-hydroxypropyl)-N-methylamin.

Die Polyurethane bzw. Polyurethanharnstoffe A) werden vorzugsweise so hergestellt, daß zunächst aus den unter 1) beschriebenen Polyisocyanaten, den unter 2) beschriebenen höhermolekularen Polyhydroxylverbindungen und den unter 3) beschriebenen, gegenüber Isocyanaten reaktiven Verbindungen aus der Gruppe der Siliconharze und/oder der aromatischen Polyether und/oder der aromatischen Polyester und/oder der Perfluorcarbonharze NCO-Prepolymere mit mindestens zwei endständigen Isocyanatgruppen hergestellt werden und diese dann in an sich bekannter Weise mit den unter 4) beschriebenen Kettenverlängerungsmitteln umgesetzt werden. Vorzugsweise wird die Kettenverlängerung in organischer Lösung durchgeführt, wobei die organischen Lösungsmittel der nachstehend unter C) beschriebenen Gruppe an Lösungsmitteln entnommen werden müssen. Ebenso gut ist es möglich und häufig sogar von Vorteil, Mischungen aus Lösungsmitteln und Nichtlösungsmitteln für die entstehenden Polyurethane bzw. Polyurethanharnstoffe A) als Reaktionsmedium bei der Kettenverlängerung einzusetzen, wobei gewährleistet sein muß, daß sich die Polyurethane bzw. Polyurethanharnstoffe A), zumindest in kolloidaler Form, in diesen Mischungen lösen. In diesem Fall werden die Lösungsmittel aus der nachstehend unter C) beschriebenen Gruppe an Lösungsmitteln und die Nichtlösungsmittel aus der nachstehend unter D) beschriebenen Gruppe an Nichtlösungsmitteln ausgewählt.

Bei der Kettenverlängerung in organischer Lösung arbeitet man im allgemeinen mit Feststoffgehalten von 10 - 50, vorzugsweise 20 - 40 Gew.-%. Die Viskositäten der kettenverlängerten Polyurethan-(harnstoff)-Lösungen, gemessen bei Raumtemperatur, werden auf 10 000 - 100 000, vorzugsweise 20 000 - 60 000 mPas/25 °C eingestellt. Zur Gewährleistung einer guten Viskositätsstabilität empfiehlt es sich, nach Erreichen der gewünschten Lösungsviskosität monofunktionelle Kettenabbrecher 5.), wie z.B. die in DE-OS 3 142 706 beschriebenen Oxime, in den erforderlichen geringen Mengen zuzugeben.

Grundsätzlich ist es auch möglich, die Polyurethane bzw. Polyurethanharnstoffe A) in an sich bekannter Weise mit Hilfe von geeigneten Mischaggregaten, wie z.B. Reaktionsschnecken, in der Schmelze herzustellen und die nach Abkühlung, z.B. in Form von Granulaten, erhaltenen Feststoffe zur Herstellung der Streichpasten in den genannten Lösungsmitteln oder Lösungsmittel/Nichtlösungsmittel-Gemischen aufzulösen.

Art und Mengenverhältnisse der bei der Herstellung von A) eingesetzten Ausgangsmaterialien werden im übrigen so gewählt, daß die resultierenden Polyurethane bzw. Polyurethanharnstoffe A) 1 bis 30, vorzugsweise 1 bis 20 Gew.-% an Polymersegmenten enthalten, die durch den Einbau eines, zweier oder mehrerer der vorstehend unter 3a - d) beschriebenen Aufbaukomponenten aus der Gruppe der Siliconharze, der aromatischen Polyether, der aromatischen Polyester und/oder der Perfluorcarbonharze entstanden sind.

Besonders bevorzugt handelt es sich bei der Komponente A) um Polyurethanharnstoffe, die aus

1) 10 - 40 Gew.-%, vorzugsweise 15 - 35 Gew.-%, der vorstehend unter 1.) beschriebenen aliphatischen Polyisocyanate und

2) mindestens 40 Gew.-%, vorzugsweise 45 bis 80 Gew.-%, der vorstehend unter 2.) beschriebenen höhermolekularen Polyhydroxylverbindungen und

3a) 0 - 15 Gew.-% der vorstehend unter 3a) beschriebenen Siliconharze und/oder

3b) 0 - 15 Gew.-% der vorstehend unter 3b) beschriebenen aromatischen Polyether und/oder

3c) 0 - 15 Gew.-% der vorstehend unter 3c) beschriebenen aromatischen Polyester und/oder

3d) 0 - 15 Gew.-% der vorstehend unter 3d) beschriebenen Perfluorcarbonharze, wobei die Summe der Prozentanteile der Aufbaukomponenten 3a) - 3d) 1 - 20 Gew.-% beträgt, und

4a) 0 - 20 Gew.-% der vorstehend unter 4a) beschriebenen Polyhydroxylverbindungen vom Molekulargewicht 62-399 und/ oder

4b) 2 - 20 Gew.-%, vorzugsweise 3 bis 20 Gew.-%, der vorstehend unter 4b) beschriebenen Polyamine und/oder Hydrazine, und

5.) 0 - 5 Gew.-% an sonstigen PU-Aufbaukomponenten, z.B. einbaufähigen Abstoppern, einbaufähigen Vernetzern oder einbaufähigen Stabilisatoren,

hergestellt worden sind.

Neben der Komponente A) kann gegebenenfalls als zweiter Polyurethan(harnstoff) die Komponente B) bei der Formulierung der Streichpasten mitverwendet werden. Es handelt sich bei B) um ganz analog zu A) aufgebaute hydrophobe Polyurethane bzw. Polyurethanharnstoffe, die jedoch nicht die speziellen Polymersegmente 3a) - 3d) enthalten, die durch den Einbau der unter 3a) - 3d) beschriebenen Verbindungen entstehen.

Zur Herstellung der Komponente B) kann daher von der gleichen Palette an Ausgangsmaterialien ausgegangen werden wie vorstehend bei der Herstellung der Komponente A) beschrieben, mit Ausnahme der dort unter 3a) bis 3d) genannten speziellen Aufbaukomponenten.

Die erfindungsgemäß geeigneten organischen Lösungsmittel C) sind organische Verbindungen, vorzugsweise des Siedepunktsbereichs 50 bis 150 °C, mit denen sich stabile Lösungen der Polyurethane bzw. Polyurethanharnstoffe A) und B) herstellen lassen. Der Begriff "Lösungen" umfaßt in diesem Zusammenhang nicht nur echte, optisch klare Polymerlösungen, sondern auch sedimentationsstabile, Kolloid- oder Mikrogelanteile enthaltende organische Lösungssysteme. Es sind dies beispielsweise Tetrahydrofuran, Diisopropylether, Dioxan, Glykolmonomethylether, vorzugsweise jedoch Alkohole und/oder Ketone mit jeweils 4 bis 6 Kohlenstoffatomen, besonders bevorzugt Isobutanol und/oder Methylethylketon.

Die erfindungsgemäß geeigneten organischen Nichtlösungsmittel D) sind organische Verbindungen, vorzugsweise des Siedepunktsbereichs 50 bis 150 °C, mit denen sich ohne weitere Zusätze keine stabilen Lösungen der Polyurethane bzw. Polyurethanharnstoffe A) und B) herstellen lassen. Vorzugsweise handelt es sich bei diesen Nichtlösungsmitteln um aromatische und/oder aliphatische Kohlenwasserstoffe mit 6 bis 12 Kohlenstoffatomen und/oder Fettsäureester mit 3 bis 7 Kohlenstoffatomen. Besonders bevorzugt werden Toluol, die isomeren Xylole und/oder die als "Solvenaphtha" bekannten handelsüblichen Gemische höhersiendender Kohlenwasserstoffe eingesetzt.

Die in Kombination mit den bisher genannten Komponenten zur Herstellung der Streichpasten gegebenenfalls einzusetzenden Polymere E) sind Nicht-Polyurethane, d.h. Polymere ohne Urethan- und Harnstoffgruppen, die seiten- und/oder endständig mit Basen ganz oder teilweise neutralisierte Carboxylatgruppen tragen. Vorzugsweise geht man dabei von homo- oder copolymeren Polyacryl- und/oder Polymethacrylsäuren und/oder Carboxylgruppen enthaltenden Cellulosederivaten wie z.B. Carboxymethylcellulose aus. Besonders bevorzugt werden ganz oder teilweise neutralisierte Poly(meth-)acrylsäuren oder (Meth-)Acrylsäure-Copolymerisate eingesetzt. Dabei handelt es sich um Harze, die durch Polymerisation von Acrylsäure und/oder Methacrylsäure mit sich selbst oder mit anderen Vinyl- bzw. Vinylidenmonomeren, wie z.B. Styrol, Styrolderivaten, (Meth-)Acrylsäureestern mit 1 bis 8 C-Atomen in der Alkoholkomponente oder auch Hydroxyalkylestern der (Meth)-Acrylsäure und/oder Acrylnitril erhalten worden sind. Der (Meth)-Acrylsäureanteil im (Co)Polymerisat liegt zwischen 1 und 100 Gew.-%, bevorzugt zwischen 2,5 und 60 Gew.-%. Diese Polyacryl-Harze besitzen in der Regel mittlere Molekulargewichte von mehr als 100 000 bis hinauf in den Mikrogel-Bereich.

Zur Neutralisation der Carboxylgruppen können beliebige organische oder anorganische Basen verwendet werden. Vorzugsweise werden Ammoniak oder organische Amine, wie z.B. Triethylamin, Tributylamin, N,N-Dimethylbenzylamin, N-Methylmorpholin oder organische Aminoalkohole, wie z.B. Ethanolamin, N,N-Dimethylethanolamin, Diethanolamin, N-Methyldiethanolamin oder Triethanolamin eingesetzt.

Die erfindungsgemäß geeigneten Polymeren E) können vorteilhaft in Form ihrer wäßrigen Lösungen oder Dispersionen zur Anwendung kommen, wodurch bereits das zur Herstellung der Streichpasten notwendige Wasser F) eingeführt werden kann. Es ist aber auch ebensogut möglich, mit dem Polymeren E) nur einen Teil des Wassers F) einzuführen und die Restmenge nachträglich zuzugeben. Wird das Polymere E), was weniger bevorzugt ist, als Feststoff oder in Form einer organischen Lösung eingesetzt, so muß selbstverständlich die gesamte Wassermenge F) nachträglich zugegeben werden.

Neben den bisher genannten Hauptkomponenten A) - F) können die Streichpasten gegebenenfalls noch übliche Beschichtungshilfsmittel G) wie z.B. Vernetzer und/oder Hydrophobierungsmittel enthalten. Als Vernetzer, die insbesondere zur Verbesserung der Echtheiten der aus den Streichpasten herstellten Beschichtungen gegenüber Reinigungsprozessen dienen können, eignen sich beispielsweise Melamin-Formaldehyd-Harze, blockierte oder freie Polyisocyanate, Polyaziridine, Epoxidharze und/oder Epoxidharz-Polyamin-Kombinationen oder Mischungen solcher Vernetzer. Als Hydrophobierungsmittel können z.B. handelsübliche Silicone und/oder Fluorcarbonharze zugesetzt werden. Eingeschlossen sind die zur schnellen Vernetzung der Harze notwendigen üblichen Katalysatoren.

Die erfindungsgemäß geeigneten Streichpasten enthalten die vorstehend beschriebenen Komponenten in den vorstehend genannten Mengenanteilen, vorzugsweise jedoch in folgenden Mengen:
5 - 30 Gew.-% A), 0 Gew.-% B), mindestens 5 Gew.-%, vorzugsweise 5 - 40 Gew.-%, insbesondere 5 - 30 Gew.-% C), 4.5 - 40 Gew.-% D), 0,5 - 5 Gew.-% E), 20 - 60 Gew.-% F), und 0 - 5 Gew.-% G).

Erfindungsgemäß besonders bevorzugt zu verwendende Streichpasten sind in den Ansprüchen 9 und 10 definiert.

Die Herstellung der Streichpasten geschieht jeweils durch Vermischen einer organischen, hydrophoben Polyurethan-Phase mit einer wäßrigen Phase unter Bildung eines stabilen, mehrphasigen, emulsionsartigen Gemisches. Wie vorstehend beschrieben, ist es bevorzugt, daß dabei die organische Phase die Polyurethan(harnstoffe) A) und gegebenenfalls B), die organischen Lösungsmittel C), gegebenenfalls die organischen Nichtlösungsmittel D) und gegebenenfalls die Beschichtungshilfsmittel G) enthält. Das Carboxylatgruppen-haltige Polymere E) ist vorzugsweise in der Gesamtmenge oder einer Teilmenge des Wassers F) enthalten. Daraus folgt, daß die Herstellung der Streichpasten sowohl in einem Einstufen-, als

auch in Mehrstufen-Verfahren erfolgen kann. Ein Mehrstufen-Verfahren liegt beispielsweise vor, wenn zunächst die organische Polyurethan-Phase mit einer Lösung oder Dispersion des Carboxylat-Polymeren E) in einer Teilmenge des Wassers F) vermischt wird und anschließend die Restmenge des Wassers F) zu dem entstandenen Gemisch gegeben wird. In ähnlicher Weise Können auch Teilmengen der organischen Losungsmittel C) oder der organischen Nichtlösungsmittel D) noch nachträglich zu dem bereits wasserhaltigen Gemisch zugegeben werden.

Die Vermischung der organischen mit den wäßrigen Phasen zur Herstellung der erfindungsgemäß geeigneten Streichpasten ist mit den in der Beschichtungstechnologie üblichen Rühraggregaten, wie z.B. Dissolvern oder Dispersern durchzuführen. Die Streichpasten Können daher aus den vorstehend beschriebenen organischen und wäßrigen Vorprodukten vom Anwender dieser Beschichtungssysteme problemlos hergestellt werden. Die gebrauchsfertigen Pasten zeichnen sich durch hohe Homogenität und gute Lagerstabilität aus und bieten somit eine hohe Verarbeitungssicherheit.

Bei Bedarf Können die Streichpasten auch in pigmentierter Form angewendet werden. Die Pigmentierung erfolgt dann vorzugsweise auf der Stufe der Streichpasten selber; es ist aber auch möglich, die Vorprodukte, wie z.B. die organischen Polyurethan-Lösungen zu pigmentieren.

Dabei können in der Textilbeschichtung übliche organische oder anorganische Pigmente und Pulver, aber auch lösliche Farbstoffe, eingesetzt werden.

Zur Durchführung des erfindungsgemäßen Verfahrens werden die vorstehend beschriebenen Streichpasten nach den in der Textilbeschichtung bekannten Methoden entweder direkt auf Textil- oder Ledersubstrate gerakelt oder nach dem Transferverfahren verarbeitet, d.h. zunächst auf Trennpapier gestrichen. Die Beschichtungen werden dann im Trockenkanal der Textilbeschichtungsmaschine Temperaturen von etwa 40 - 120 °C, bevorzugt 50 - 80 °C ausgesetzt, wobei die Temperatur gegebenenfalls sukzessive gesteigert werden Kann. Dabei tritt infolge selektiver Verdampfung der Lösungsmittel die Koagulation ein.

Beim Directbeschichtungsverfahren wird in der Regel mit zwei Strichen gearbeitet. Auf den getrockneten ersten Strich (Grundstrich) wird als zweiter Strich ein Deckstrich aufgerakelt und unter den oben beschriebenen Bedingungen getrocknet. Die für den Deckstrich geeigneten Streichpasten sind ebenfalls solche der erfindungsgemäßen, vorstehend beschriebenen Art; ihre Basis-Polyurethane können mit denen der Grundstrich-Pasten identisch oder auch davon verschieden sein.

Beim Transfer- (oder Umkehr-) Verfahren wird im einfachsten Fall nach dem Trocknen des auf das Trennpapier aufgebrachten ersten Striches, der bei diesem Verfahren den Deckstrich darstellt, ein Haftstrich aufgerakelt, woran sich das Aufkaschieren des Textilsubstrates, das Trocknen und das Abziehen des Trennpapiers anschließt. Dieser Haftstrich Kann entweder aus Streichpasten der erfindungsgemäßen, vorstehend beschriebenen Art oder auch aus herkömmlichen Dispersions- oder Lösungs-Haftstrichprodukten, die gegebenenfalls mechanisch oder mit Hilfe von Treibmitteln geschäumt sind, hergestellt werden.

Grundsätzlich ist es auch möglich, nach dem erfindungsgemäßen Verfahren Beschichtungen in drei- oder mehrschichtigem Aufbau herzustellen, wobei der Deckstrich gegebenenfalls eine Kompakte, nicht koagulierte Schicht geringer Auflage von z.B. 3 - 15 g/m$^3$, bevorzugt 4 - 6 g/m$^3$ sein kann.

Die Koagulations- bzw. Trockenzeiten betragen pro Strich etwa 1 - 3 min, was gemessen an anderen Verdampfungskoagulationsverfahren vergleichsweise hohe Arbeitsgeschwindigkeiten auf den Beschichtungsmaschinen ermöglicht. Wenn den Streichpasten thermisch härtende Vernetzer beigemischt sind, kann anschließend an den Trocknungsprozeß nach eine Vernetzung bei Temperaturen von etwa 120 - 200 °C, vorzugsweise 140 - 160 °C, vorgenommen werden.

Die nach dem vorstehend beschriebenen Verfahren erhaltenen Beschichtungen weisen eine hohe Wasserdampfdurchlässigkeit bei gleichzeitig guter Wasserdichtigkeit und hoher Beständigkeit gegenüber Alterungs- und Reinigungsprozessen auf. Die entsprechend beschichteten Textilien bzw. Leder eignen sich z.B. zur Herstellung von hochwertiger Sport- und Regenbekleidung, von Sport- und Freizeitausrüstungen sowie von Schuhmaterialien.

Die nachstehenden Beispiele dienen zur weiteren Erläuterung der Erfindung. Alle Prozentangaben beziehen sich, soweit nicht anders vermerkt, auf Gewichtsprozente.

Die in den Beispielen aufgeführten Beschichtungsprüfungen wurden nach folgenden Methoden durchgeführt:

- Wasserdichtigkeit nach DIN 53 886, gemessen in mm Wassersäule (mm WS)
- Wasserdampfdurchlässigkeit nach IUP 15 (DIN 53 333), gemessen in mg/cm$^3$.h
- Scrubb-Test nach SNV 198 498 (Schweizer Normenvereinigung)

Beispiele

Beispiel 1

I) Herstellung einer Polyurethanharnstoff-Lösung

2193 g eines Polyesters aus Diethylenglykol und Adipinsäure der OH-Zahl 44 und 79 g eines α,ω-Bishydroxymethyl-polydimethylsiloxans der OH-Zahl 200 werden entwässert und anschließend mit 710 g Isophorondiisocyanat umgesetzt. Nach 2-stündiger Reaktion bei 90 - 100 ° C ist ein NCO-Wert von 5,9 % (Theorie: 6,2 %) erreicht. Das so erhaltene Prepolymer wird mit 3916 g Toluol verdünnt und auf 25 ° C abgekühlt. Zu dieser Lösung läßt man unter gutem Rühren eine Lösung von 374 g Isophorondiamin in 3916 g Isobutanol zutropfen. Wenn eine Viskosität von 30 000 - 40 000 mPas erreicht ist, wird die Kettenverlängerung durch Zugabe von 40 g Butanonoxim abgestoppt. Man rührt 2 h bei 50 ° C nach und erhält eine Polyurethanharnstofflösung mit einer Viskosität (25 ° C) von ca. 40 000 mPas.

II) Herstellung der Grundstrichpaste

815 g der unter 1/I) beschriebenen Lösung werden mit 160 g Toluol verdünnt. Dann fügt man 13 g einer 75 %igen Lösung eines blockierten Polyisocyanats mit einem blockierten NCO-Gehalt von ca. 10 % (beschrieben in DE-OS 3 313 236, Beispiel 4) und 12 g einer 50 %igen wäßrigen Melaminharz-Lösung (Hexamethoxymethylmelamin) hinzu. Es entsteht eine homogene, stabile Lösung mit einer Viskosität (25 ° C) von ca. 10 000 mPas.

In diese organische Lösung rührt man 100 g der nachstehend beschriebenen wäßrigen Dispersion einer neutralisierten Polyacrylsäure ein. Unter hochtourigem Rühren werden schließlich 750 g Wasser zugegeben. Man erhält eine weiße, zweiphasige Streichpaste mit einem Feststoffgehalt von ca. 15 % und einer Viskosität (25 ° C) von ca. 12 000 mPas.

Diese Paste enthält die Komponenten A - G in folgenden Gew.-%-Anteilen: A:B:C:D:E:F:G = 13,2/0/15,4/24,1/1,0/44,9/1,4.

Herstellung der neutralisierten Polyacrylsäure-Dispersion:

250 g einer 25 %igen wäßrigen Dispersion eines Copolymerisats aus 55 % Ethylacrylat und 45 % Methacrylsäure werden mit 625 g Wasser verdünnt und mit 125 g Triethanolamin neutralisiert. Das neutralisierte Copolymere besteht zu ca. 40 % aus einem wasserlöslichen Anteil des mittleren Molekulargewichts 250 000 und zu ca. 60 % aus einem höhermolekularen Mikrogelanteil.

III) Herstellung der Deckstrichpaste

810 g der unter 1/I) beschriebenen Lösung werden mit 165 g Toluol verdünnt. Dann fügt man 20 g der unter 1/II) beschriebenen 50 %igen wäßrigen Melaminharz-Lösung und 5 g einer 40 %igen Lösung eines Fluorcarbonharzes (Scotchgard® FC-326, Fa. 3M) hinzu. Es entsteht eine homogene, stabile Lösung mit einer Viskosität (25 ° C) von ca. 10 000 mPas.

In diese Lösung rührt man 100 g der unter 1/II) beschriebenen neutralisierten wäßrigen Polyacrylsäure-Dispersion ein und gibt schließlich unter hochtourigem Rühren 750 g Wasser zu. Man erhält eine weiße, zweiphasige Streichpaste mit einem Feststoffgehalt von ca. 15 % und einer Viskosität von ca. 10 000 mPas. Diese Paste enthält die Komponenten A - G in folgenden Gew.-%-Anteilen; A:B:C:D:E:F:G = 13,1/0/15,3/24,3/1,0/44,9/1,4.

IV) Direktbeschichtung

a) Substrat Polyamid:
Ein Polyamidgewebe von ca. 100 g/m$^3$ Warengewicht wird mit der Grundstrichpaste 1/II) per Luftrakel beschichtet. Die Fahrbedingungen sind:
Trockentemperatur; 70 ° C/80 ° C/80 ° C
Geschwindigkeit: 6 m/min
Auflage (trocken): 5 g/m$^3$
Am zweiten Streichwerk wird mit der Deckstrichpaste 1/III) über Walzenrakel der Deckstrich aufgebracht.
Rakelspalt: 0,23 mm

Trockentemperatur: 70 ° C/70 ° C/70 ° C
anschl. Vernetzung bei: 140 - 160 ° C
Auflage (trocken): 20g/$m^3$
Der Artikel zeichnet sich bei einer Gesamtauflage von 25 g/$m^3$ durch hohe Wasserdichtigkeit und hohe Wasserdampfdurchlässigkeit aus.

| Wasserdichtigkeit: | |
|---|---|
| - Original | 1200 - 1300 mm WS |
| - 30 ° C-Wäsche 1 x | 950 - 1050 mm WS |
| 30 ° C-Wasche 3 x | 800 - 900 mm WS |
| - Chemischreinigung 1 x | 850 - 900 mm WS |
| Chemischreinigung 3 x | 600 - 700 mm WS |

Wasserdampfdurchlässigkeit 7 mg/$cm^3$ h
Scrubb-Test, 1000 Hübe, naß: ohne Beschädigung
b) Substrat Baumwolle:
Ein Baumwollgewebe von ca. 140 g/$m^3$ Warengewicht wird nach üblichen Methoden hydrophobiert (mit PERLIT® SE (20 g/l) sowie PERLIT® SI/SW (20 g/l), Bayer AG, D-5090 Leverkusen), und nach Abquetschen im feuchten Zustand mit der Grundstrichpaste 1/II) per Luftrakel beschichtet.
Trockentemperatur: 70 ° C/80 ° C/100 ° C
Geschwindigkeit: 6 m/min
Auflage (trocken): 7 g/$m^3$
Am zweiten Streichwerk wird über Walzenrakel die Deckstrichpaste 1/III) gestrichen.
Rakelspalt: 0,35 mm
Trockentemperatur: 70 ° C/70 ° C/70 ° C
anschl. Vernetzung bei 140 - 160 ° C
Auflage (trocken): 28 g/$m^3$

| Wasserdichtigkeit: | |
|---|---|
| - Original | 1400 - 1500 mm WS |
| - 30 ° C-Wäsche 1 x | 1000 - 1100 mm WS |
| 30 ° C-Wäsche 3 x | 800 - 900 mm WS |
| - Chemischreinigung 1 x | 950 - 1050 mm WS |
| Chemischreinigung 3 x | 650 - 750 mm WS |

Wasserdampfdurchlässigkeit: 10 mg/$cm^3$ h
Scrubb-Test, 1000 Hübe, naß: ohne Beschädigung
c) Substrat Mischgewebe aus Baumwolle und Polyester bzw. Polyamid:
Mischgewebe aus Baumwolle und Polyester bzw. Polyamid (ca. 130 g/$m^3$ Warengewicht) werden nach dem Hydrophobieren gemäß b) im feuchten Zustand mit der Grundstrichpaste 1/II) beschichtet, wie unter b) beschrieben. Anschließend wird am zweiten Streichwerk, wie ebenfalls unter b) beschrieben, die Deckstrichpaste 1/III) gerakelt.

| | Polyamid/ Baumwolle | Polyester/ Baumwolle |
|---|---|---|
| Gesamtauflage | 28 g/m³ | 28 g/m³ |
| Wasserdichtigkeit | | |
| - Original | 1200 | 1500 mm WS |
| - 30° C-Wäsche 1 x | 900 | 1000 mm WS |
| 30° C-Wäsche 3 x | 750 | 850 mm WS |
| - Chemischreinigung 1 x | 750 | 900 mm WS |
| Chemischreinigung 3 x | 600 | 700 mm WS |
| Wasserdampfdurchlässigkeit | 7 | 9 mm/cm³ h |
| Scrubb-Test, 1000 Hübe, naß | ohne Beschädigung | ohne Beschädigung |

V) Transferbeschichtung

a) Streichpaste zur Herstellung des wasserdampfdurchlässigen Deckstrichs:
1000 g der unter 1/III) beschriebenen, Wasser enthaltenden Deckstrichpaste werden mit 25 g ACRAMIN®-Braun FRL (Bayer AG, D-5090 Leverkusen) pigmentiert.
b) Streichpaste zur Herstellung eines dünnen Vordeckstrichs (nicht erfindungsgemäß):
1000 g der unter 1/I) beschriebenen Polyurethanharnstofflösung werden mit 150 g Toluol und 150 g Isobutanol verdünnt und mit 40 g ACRAMIN®-Braun FRL pigmentiert.
c) Streichpaste zur Herstellung eines wasserdampfdurchlässigen Haftstrichs:
1000 g der unter 1/II) beschriebenen, Wasser enthaltenden Grundstrichelemente werden mit 25 g ACRAMIN®-Braun FRL pigmentiert.
d) Dispersionsschlagschaum zur Herstellung eines geschäumten Haftstrichs (nicht erfindungsgemäß):
Ein Gemisch aus 500 g der nachstehend beschriebenen wäßrigen Polyurethan-Dispersion und 500 g der nachstehend beschriebenen wäßrigen Polyacrylat-Dispersion, 6 g einer 50 %igen wäßrigen Ammonstearat-Lösung, 10 g der unter 1/II) beschriebenen 25 %igen wäßrigen Polyacrylsäure-Dispersion und 20 g einer 50 %igen wäßrigen Melaminharzlösung (Hexamethoxymethylmelamin) werden mit konzentrierter wäßriger Ammoniak-Lösung auf einen pH-Wert von 9 eingestellt und mit einem Schnellrührer zu einem Schaum (500 g/l) geschlagen.

Zusammensetzung der Polyurethan-Dispersion:
82,4 % Polyester aus Hexandiol-1,6, Neopentylglykol und Adipinsäure der OH-Zahl 66 (Gewichtsverhältnis Hexandiol:Neopentylglykol = 65:35), 14,6 % Hexamethylendiisocyanat, 2,4 % Na-Salz der 2-Aminoethyl-2-aminoethan-sulfonsäure und 0,6 % Ethylendiamin; Feststoff 40 %ig dispergiert in Wasser.

Zusammensetzung der Polyacrylat-Dispersion:
96 % Butylacrylat, 1 % Itaconsäure, 2,5 % Acrylamid und 0,5 % N-Methylolacrylamid; Feststoff 40 %ig dispergiert in Wasser.

e) Artikel aus zwei Strichen:
Am 1. Streichwerk einer Tandem-Beschichtungsanlage wird auf ein handelsübliches Trennpapier die Streichpaste a) gerakelt.
Rakelspalt: 0,18 mm
Trockentemperatur: 70 °C/70 °C/70 °C
Verweilzeit im Trockenkanal: 2,5 min
Auflage (trocken): 15 g/m³
Am zweiten Streichwerk wird die Paste c) mit einem Rakelspalt von 0,25 mm aufgebracht, und anschließend wird eine gerauhte Baumwollware von ca. 140 g/m³ Gewicht zukaschiert.
Trockentemperatur: 60 °C/70 °C/90 °C
anschl. Vernetzung bei: 150 - 160 °C

Man erhalt einen weichen, geschmeidigen Artikel mit einer Gesamtauflage von ca. 35 $g/m^3$ und einer Wasserdampfdurchlässigkeit von 9 $mg/cm^3$ h, der sich zur Herstellung leichter Oberbekleidung eignet.

f) Artikel aus zwei Strichen:

Auf den unter e) beschriebenen getrockneten Deckstrich wird am zweiten Streichwerk die Dispersionsschlagschaum-Paste d) mit einem Rakelspalt von 0,3 mm aufgebracht. Anschließend wird das unter e) beschriebene Baumwollsubstrat zukaschiert. Die Trocknung des Haftstrichs erfolgt ansteigend bei 80 °C/120 °C/160 °C. Man erhält einen weichen, fülligen Artikel mit einer Gesamtauflage von ca. 60 $g/m^3$ und einer Wasserdampfdurchlässigkeit von 10 $mg/cm^3$.

g) Artikel aus drei Strichen:

Am 1. Streichwerk einer Dreistrichanlage wird auf ein handelsübliches Trennpapier die Streichpaste b) gerakelt und durch Trocknung bei 60 - 120 °C ein dünner, kompakter Vordeckstrich von 6 $g/m^3$ Feststoffauflage erzeugt.

Darauf wird am 2. Streichwerk mit der Paste a) der wasserdampfdurchlässige Deckstrich gerakelt; Fahrbedingungen: wie unter e) beschrieben; Auflage (trocken): 15 $g/m^3$.

Am 3. Streichwerk wird als Haftstrich die Dispersionsschlagschaumpaste d) mit einem Rakelspalt von 0,3 mm aufgebracht. Anschließend wird das unter e) beschriebene Baumwollsubstrat zukaschiert. Die Trocknung des Haftstrichs erfolgt ansteigend bei 80 °C/120 °C/160 °C. Man erhält einen weichen, sehr fülligen Artikel mit einer Gesamtauflage von ca. 65 $g/m^3$ und einer Wasserdampfdurchlässigkeit von 7 $mg/cm^3$ h.

## Beispiel 2

I) Grundstrich: Polyurethanharnstoff-Lösung und Streichpaste daraus.

2193 g eines Polyesters aus Diethylenglykol und Adipinsäure der OH-Zahl 44 und 79 g eines $\alpha,\omega$-Bishydroxymethyl-polydimethylsiloxans der OH-Zahl 200 werden wie in Beispiel 1/I) beschrieben mit 577 g Isophorondiisocyanat umgesetzt; NCO-Gehalt: 4,5 %.

Das so erhaltene Prepolymer wird durch Zugabe von 2420 g Toluol verdünnt und auf 20 °C abgekühlt. Unmittelbar vor Beginn der nun folgenden Kettenverlängerung verdünnt man noch weiter mit 1470 g Isobutanol.

Kettenverlängerung: Eine getrennt hergestellte Lösung von 272 g IPDA in einem Gemisch von 1224 g Toluol und 1224 g Isobutanol wird zügig unter gutem Rühren zu der gekühlten Prepolymer-Lösung getropft. Mit steigender Viskosität werden nach und nach 950 g Isobutanol zugegeben. Wenn eine Viskosität von 30 000 bis 40 000 mPas erreicht ist, wird durch Zugabe von 30 g Butanonoxim abgestoppt.

Man rührt 1 h bei 50 °C nach und erhalt eine klare Lösung mit einer Viskosität (25 °C) von 40 000 mPas.

815 g der oben beschriebenen Polyurethanharnstoff-Lösung werden mit 165 g Toluol verdünnt. Dieser verdünnten Lösung fügt man 15 g des in Beispiel 1/II) beschriebenen blockierten Polyisocyanats und 5 g eines Epoxid-Harzes (LEKUTHERM®X 50, Bayer AG) hinzu. Weiterhin rührt man 100 g der unter 1/II) beschriebenen neutralisierten wäßrigen Polyacrylsäure-Dispersion ein und dispergiert darin dann 750 g Wasser. Die Streichpaste hat einen Festkörpergehalt von ca. 15 % und eine Viskosität (25 °C) von 10 000 mPas.

II) Deckstrich: Polyurethanharnstoff-Lösung und Streichpaste daraus:

1913 g eines Polyesters aus Butandiol-1,4 und Adipinsäure (OHZ 50) und 85 g eines $\alpha,\omega$-Bishydroxymethyl-polydimethylsiloxans der OHZ 200 werden in einer Reaktionsschnecke mit 644 g Isophorondiisocyanat und 323 g Isophorondiamin bei Temperaturen zwischen 80 - 180 °C umgesetzt. Der extrudierte Schmelzstrang wird nach Kühlung granuliert. 300 g Polyurethanharnstoff-Granulat werden in 350 g Toluol und 350 g Isobutanol gelöst, die 30 %ige Lösung hat eine Viskosität (25 °C) von 30 000 mPas.

810 g dieser Lösung werden mit 165 g Toluol verdünnt. Zu dieser Lösung fügt man 20 g eines 50 %igen, wäßrigen Melaminharzes gemäß Beispiel 1/II) und 5 g eines Siliconharzes (SILOPREN®E 50, Bayer AG). Anschließend werden 100 g der unter 1/II) beschriebenen neutralisierten wäßrigen Polyacrylsäure-Dispersion und 750 g Wasser untergemischt. Die ca. 15 %ige Streichpaste hat eine Viskosität von ca. 15 000 mPas.

III) Direktbeschichtung

Ein Polyamidgewebe von ca. 90 g/m$^3$ Gewicht wird mit der Grundstrichpaste 2/I) per Luftrakel beschichtet. Die Fahrbedingungen in einem 15 m langen Trockenkanal sind:
Trockentemperatur: 70 ° C/80 ° C/100 ° C/150 ° C
Geschwindigkeit: 8 m/min
Auflage (trocken): 5 g/m$^3$
Am zweiten Streichwerk wird die Deckstrichpaste 2/II) per Walzenrakel aufgebracht:
Trockentemperatur: 70 ° C über dem gesamten Kanal
Rakelspalt: 0,30 mm
Auflage (trocken): 27 g/m$^3$
Nach Vernetzung (1 min/160 ° C) wird der Artikel, wie in Beispiel 1/IVb) beschrieben, hydrophobiert.

| Wasserdichtigkeit: | |
|---|---|
| - Original | 1500 mm WS |
| - 30 ° C-Wäsche 1 x | 1000 mm WS |
| 30 ° C-Wäsche 3 x | 900 mm WS |
| - Chemischreinigung 1 x | 800 mm WS |
| Chemischreinigung 3 x | 700 mm WS |

Wasserdampfdurchlässigkeit: 5 mg/cm$^3$ h
Scrubb-Test, 1000 Hübe, naß: ohne Beschädigung

Beispiel 3

I) Grundstrich

1913 g eines Polyesters aus Diethylenglykol und Adipinsäure der OH-Zahl 44 und 138 g eines Polyethers aus Bisphenol A und Propylenoxid der OH-Zahl 205 werden nach dem Entwässern mit 348 g Toluylendiisocyanat-2,4/2,6 (65:35) umgesetzt. Nach 1-stündiger Reaktion bei 100 ° C ist ein NCO-Wert von 3,5 % erreicht.

Das NCO-Prepolymer wird in 2997 g Toluol gelöst und vor Beginn der Kettenverlängerung mit 1997 g Isobutanol verdünnt. Bei 25 ° C tropft man eine Lösung von 170 g Isophorondiamin in 1000 g Isobutanol hinzu. Nach Erreichen einer Viskosität von 50 000 mPas wird die Additionsreaktion durch Zugabe von 20 g Butanonoxim abgestoppt. Die Lösung ist 30 %ig.

815 g der oben beschriebenen Polyurethanharnstofflösung werden mit 165 g Toluol verdünnt. Dieser verdünnten Lösung fügt man 15 g des in Beispiel 1/II) beschriebenen Polyisocyanats und 5 g eines Polyazirirdins wie es z.B. in DE-A 3 415 920 beschrieben ist, hinzu. Weiterhin rührt man 100 g der unten beschriebenen neutralisierten, wäßrigen Polyacrylsäure-Dispersion ein und mischt anschließend 750 g Wasser unter. Man erhält eine weiße, zweiphasige Streichpaste von ca. 15 % Feststoffgehalt mit einer Viskosität (25 ° C) von ca. 15 000 mPas.

Herstellung der Polyacrylat-Dispersion:
250 g der unter 1/II) beschriebenen 25 %igen Polyacrylsäure-Dispersion werden mit 662 g Wasser verdünnt und mit 88 g N-Methylmorpholin neutralisiert,

II) Deckstrich

2040 g eines Polyesters aus Diethylenglykol und Adipinsäure der OH-Zahl 44 und 110 g eines Polyethers aus Bisphenol A und Propylenoxid der OHZ 205 werden nach bekannter Methode bei 100 - 110 ° C mit 666 g Isophorondiisocyanat umgesetzt. Nach 2-stündiger Reaktion ist ein NCO-Wert von 5,9 erreicht.

Das Prepolymer wird in 3722 g Toluol und 1000 g Isobutanol gelost. Bei 25 ° C verlängert man mit einer Lösung von 375 g Isophorondiamin in 2722 g Isobutanol, Nach Erreichen einer Viskosität von 40 000 mPas wird mit 20 g Butanonoxim die Polyadditionsreaktion abgestoppt. Die Lösung ist 30 %ig.

810 g der 30 %igen Lösung werden mit 160 g Ethylacetat verdünnt. Zu dieser Lösung fügt man 25 g des unter 1/II) beschriebenen 50 %igen, wäßrigen Melaminharzes und 5 g eines Siliconharzes (BAYSILON®OF/OH 502, Bayer AG). Weiterhin rührt man 100 g der unter 3/I) beschriebenen neutralisierten,

wäßrigen Polyacrylsäure-Dispersion ein und mischt anschließend 750 g Wasser unter. Die zweiphasige Streichpaste hat ca. 15 % Feststoffgehalt und eine Viskosität (25 °C) von 10 000 mPas.

III) Direktbeschichtung

Ein Polyestergewebe von 80 g/m$^3$ Gewicht wird analog 2/III) mit der Grundstrichpaste 3/I) per Luftrakel und der Deckstrichpaste 3/II) per Walzenrakel beschichtet.
Gesamtauflage: 25 g/m$^3$

| Wasserdichtigkeit: | |
|---|---|
| Original | 1100 mm WS |
| - 30 °C-Wäsche 1 x | 900 mm WS |
| 30 °C-Wäsche 3 x | 800 mm WS |
| - Chemischreinigung 1 x | 700 mm WS |
| Chemischreinigung 3 x | 600 mm WS |

Wasserdampfdurchlässigkeit: 5 mg/cm$^3$ h Scrubb-Test, 1000 Hübe, naß: ohne Beschädigung

## Beispiel 4

I) Grundstrich

Streichpaste gemäß Beispiel 2/I)

II) Deckstrich

1913 g eines Polyesters aus Diethylenglykol und Adipinsäure der OHZ 44 und 102 g eines Polyesters aus Ethylenglykol und Phthalsäure der OHZ 275 werden bei 100 - 110 °C mit 666 g Isophorondiisocyanat umgesetzt. Nach 2-stündiger Reaktion ist ein NCO-Wert von 6,0 erreicht. Die Prepolymerschmelze wird in 5063 g Toluol gelost. Bei 25 °C wird zur Kettenverlängerung eine Lösung von 340 g Isophorondiamin in 4000 g Isobutanol zugetropft. Zur Beendigung der Polyadditionsreaktion werden nach Erreichen einer Viskosität von 40 000 mPas 20 g Butanonoxim hinzugefügt. Die Lösung ist 25 %ig.

In 965 g dieser Lösung werden 25 g der unter 1/II) beschriebenen Melaminharz-Lösung und 10 g des unter 3/II) beschriebenen Siliconharzes eingerührt. Vor der Dispergierung mit 750 g Wasser werden 100 g der unter 3/I) beschriebenen neutralisierten, wäßrigen Polyacrylsäure-Dispersion eingearbeitet. Die Streichpaste hat eine Viskosität (25 °C) von 12 000 mPas.

III) Direktbeschichtung

Analog Beispiel 3/III) wird ein Polyestergewebe mit der Paste 2/I) grundiert und weiter mit der Paste 4/II) beschichtet,
Gesamtauflage: 30 g/m$^3$

| Wasserdichtigkeit: | |
|---|---|
| - Original | 1200 mm WS |
| - 30 °C-Wäsche 1 x | 900 mm WS |
| - Chemischreinigung 1 x | 700 mm WS |

Wasserdampfdurchlässigkeit: 4 mg/cm$^3$ h
Scrubb-Test, 1000 Hübe, naß: ohne Beschädigung

Beispiel 5

I) Grundstrich

1720 g eines Polyesters aus Hexandiol-1,6, Neopentylglykol (Glykolverhältnis = 65:35) und Adipinsäure der OHZ 56, 79 g eines $\alpha,\omega$-Bishydroxymethyl-polydimethylsiloxans der OHZ 200 werden analog 1/I) mit 555 g Isophorondiisocyanat zu einem NCO-Prepolymeren umgesetzt; NCO-Wert: 5,1 %.

Nach Lösen des Prepolymeren in 3050 g Toluol und 1050 g Isobutanol wird mit einer Lösung von 255 g Isophorondiamin in 2000 g Isobutanol der Polyurethanharnstoff aufgebaut. Das Abstoppen der Polyadditionsreaktion erfolgt mittels 20 g Butanonoxim. Die 30 %ige Lösung hat eine Viskosität (25 °C) von 39 000 mPas.

815 g dieser Lösung werden mit 165 g Xylol verdünnt. Dieser verdünnten Lösung fügt man 20 g des unter 1/II) beschriebenen blockierten Polyisocyanats hinzu. Zu der so erhaltenen Lösung fügt man 100 g der unten beschriebenen neutralisierten Polyacrylsäure-Dispersion und anschließend 750 g Wasser hinzu. Die zweiphasige Streichpaste hat eine Viskosität (25 °C) von ca. 15 000 mPas.

Herstellung der Polyacrylat-Dispersion:
250 g der unter 1/II) beschriebenen 25 %igen Polyacrylsäure-Dispersion werden mit 105 g N-Methyldiethanolamin neutralisiert, nachdem zuvor mit 645 g Wasser verdünnt worden ist.

II) Deckstrich

1720 g des in 5/I) eingesetzten Polyesters und 79 g des in 5/I) eingesetzten Dimethylpolysiloxans werden mit 710 g Isophorondiisocyanat zu einem NCO-Prepolymeren umgesetzt; NCO-Wert: 7,1 %. Das Prepolymer wird in 3350 g Toluol und 1350 g Isobutanol gelöst und analog 5/I) mit 375 g Isophorondiamin in 2000 g Isobutanol umgesetzt. Die 20 %ige Lösung hat eine Viskosität (25 °C) von 42 000 mPas.

815 g dieser Lösung werden mit 165 g Butylacetat verdünnt und mit 20 g des unter 1/II) beschriebenen blockierten Polyisocyanats, 100 g der unter 5/I) beschriebenen neutralisierten Polyacrylsäure-Dispersion und 750 g Wasser gut verrührt; Viskosität der Streichpaste: ca. 15 000 mPas (25 °C).

III) Direktbeschichtung

Analog Beispiel 3/III) wird ein Polyestergewebe mit der Paste 5/I) grundiert und weiter mit der Paste 5/II) beschichtet.
Gesamtauflage: 30 g/m$^3$

| Wasserdichtigkeit: | |
|---|---|
| - Original | 1500 mm WS |
| - 30 °C-Wäsche 1 x | 1200 mm WS |
| - Chemischreinigung 1 x | 900 mm WS |

Wasserdampfdurchlässigkeit: 8 mg/cm$^3$ h
Scrubb-Test, 1000 Hübe, naß: ohne Beschädigung

Beispiel 6

I) Grundstrich

1720 g eines Polypropylenglykolpolyethers der OHZ 56 und 79 g eines $\alpha,\omega$-Bishydroxymethyl-polydimethylsiloxans der OHZ 200 werden analog 1/I) mit 577 g Isophorondiisocyanat zu einem NCO-Prepolymeren umgesetzt; NCO-Wert: 5,6 %.

Die NCO-Preopolymerschmelze wird in 3090 g Toluol gelöst, bei 20 °C mit 1090 g Isobutanol verdünnt und mit einer Lösung von 272 g Isophorondiamin in 2000 g Isobutanol umgesetzt. Die 30 %ige Lösung hat eine Viskosität (25 °C) von 42 000 mPas.

815 g dieser Lösung werden mit 165 g Toluol verdünnt, dann fügt man 15 g des unter 1/II) beschriebenen blockierten Polyisocyanats, 10 g der unter 1/II) beschriebenen wäßrigen Melaminharzlösung, 100 g der unter 1/II) beschriebenen neutralisierten Polyacrylsäure-Dispersion und 750 g Wasser hinzu. Die zweiphasige Streichpaste hat eine Viskosität (25 °C) von ca. 17 000 mPas.

II) Deckstrich

2376 g der unter 6/I) beschriebenen Prepolymerschmelze werden in 3160 g Toluol gelöst und bei 25 °C mit 1160 g Isobutanol verdünnt. Die Prepolymerlösung wird unter Kühlung bei 25 °C mit einer Lösung von 336 g 4,4'-Diaminodicyclohexylmethan in 2000 g Isobutanol zum Polyurethanharnstoff umgesetzt. Die 30 %ige Lösung hat eine Viskosität (25 °C) von 42 000 mPas.

810 g dieser Lösung werde mit 165 g Toluol verdünnt und mit 25 g der unter 1/II) beschriebenen wäßrigen Melaminharzlösung und 5 g des unter 3/II) beschriebenen Siliconharzes versetzt. Anschließend setzt man 100 g der unter 3/I) beschriebenen wäßrigen, neutralisierten Polyacrylsäure-Dispersion und 750 g Wasser hinzu. Die ca. 15 %ige Streichpaste hat eine Viskosität (25 °C) von ca. 11 000 mPas.

Mittel Grundstrichpaste 6/I) und Deckstrichpaste 6/II) lassen sich auf Geweben aus Natur- und Synthesefasern wasserdampfdurchlässige Beschichtungen herstellen.
Wasserdampfdurchlässigkeit: 4 - 8 mg/cm$^3$ h
Wasserdichtigkeit: >1000 mm WS

Beispiel 7

I) Grundstrich

Analog 6/I) werden 1720 g eines Polytetramethylenglykolpolyethers der OHZ 56 anstelle des dort verwendeten Polypropylenglykolethers mit den übrigen, dort genannten Komponenten umgesetzt. Die 30 %ige Polyurethanharnstofflösung hat eine Viskosität (25 °C) von ca. 35 000 mPas. Die daraus analog 6/I) bereitete Grundstrichpaste hat einen Festkörpergehalt von ca. 15 % und eine Viskosität (25 °C) von 15 000 mPas.

II) Deckstrich

1440 g eines Polytetramethylenglykolpolyethers der OHZ 56 und 158 g eines $\alpha,\omega$-Bishydroxymethyl-polydimethylsiloxans der OHZ 200 werden analog 1/I) mit 710 g Isophorondiisocyanat zu einem NCO-prepolymer umgesetzt; der NCO-Wert wird mit 7,8 % bestimmt. Die Prepolymerschmelze wird in 3120 g Toluol gelöst, bei 25 °C mit 1120 g Isobutanol verdünnt und unter Kühlung mit einer Lösung von 375 g Isophorondiamin in 2000 g Amylalkohol umgesetzt. Die 30 %ige Polyurethanharnstoff-Lösung hat eine Viskosität (25 °C) von ca. 42 000 mPas. Die daraus analog 6/II) bereitete Deckstrichpaste hat einen Festkörpergehalt von ca. 15 % und eine Viskosität (25 °C) von 15 000 mPas.

Gewebe aus Natur- und Synthesefasern lassen sich mit der Grundstrichpaste 7/I) und der Deckstrichpaste 7/II) beschichten. Die Artikel zeichnen sich durch weichen Griff, wenig blockende Oberfläche, gute Haftung zum Substrat, gute Wasserdampfdurchlässigkeit und hohe Wasserdichtigkeit (>1200 mm WS) aus.

Beispiel 8

I) Grundstrich

Streichpaste gemäß Beispiel 2/I).

II) Deckstrich

2193 g eines Polyethers aus Diethylenglykol und Adipinsäure der OHZ 44 und 79 g eines $\alpha,\omega$-Bishydroxymethylpolydimethylsiloxans der OHZ 200 werden mit 760 g 4,4'-Diisocyanato-dicyclohexylmethan bei 110 °C in der Schmelze umgesetzt. Nach 2-stündiger Reaktion wird der NCO-Gehalt zu 5,0 % bestimmt.

Die Schmelze wird in 3900 g Toluol gelöst und mit 1900 g n-Butanol bei 25 °C verdünnt. Unter Kühlung läßt man eine Lösung von 323 g Isophorondiamin in 2000 g n-Butanol zufließen. Die 30 %ige Lösung hat eine Viskosität (25 °C) von 32.000 mPas. Die daraus analog 6/II) bereitete Deckstrichpaste hat einen Festkörpergehalt von 15 % und eine Viskosität (25 °C) von 15.000 mPas.

III) Direktbeschichtung

Ein Polyamidgewebe von 100 g/m³ Gewicht wird mit der Grundstrichpaste 2/I) grundiert (Luftrakel) und dann wird per Walzenrakel der Deckstrich 8/II) aufgetragen; Fahrbedingungen: analog 2/III).
Gesamtauflage: 35 g/m³

| Wasserdichtigkeit: | |
|---|---|
| -Original | 1800 mm WS |
| -30° C-Wäsche | 1500 " " |
| -Chemischreinigung | 1000 " " |

Wasserdampfdurchlässigkeit: 8 mg/cm³h
Srubb-Test, 1000 Hübe, naß: ohne Beschädigung

Beispiel 9

I) Grundstrich

Streichpaste gemäß Beispiel 2/I)

II) Deckstrich

1190 g eines Polyesters aus Hexandiol-1,6, Neopentylglykol (Glykolverhältnis = 65:35) und Adipinsäure der OHZ 66 und 176 g Perfluoroctansulfonsäure-N,N-bis-(2-hydroxyethyl)-amid werden mit 490 g Isophorondiisocyanat bei 100-110 °C zu einenm NCO-Prepolymer umgesetzt. Nach 2-stündiger Reaktion ist ein NCO-Wert von 5,2 % erreicht. Die Prepolymerschmelze wird in 2400 g Toluol gelöst, auf 25 °C abgekühlt und mit 1200 g Isobutanol verdünnt. Unter Kühlung wird eine Lösung von 205 g Isophorondiamin in 1200 g Isobutanol zugetropft. Man erhält eine 30 %ige Lösung mit einer Viskosität (25 °C) von ca. 45.000 mPas. Die daraus analog 6/II) bereitete Deckstrichpaste hat einen Festkörpergehalt von ca. 15 % und eine Viskosität (25 °C) von 17.000 mPas.

III) Direktbeschichtung

Ein Polyamidgewebe von 100 g/m³ Gewicht wird mit der Grundstrichpaste 2/I) grundiert (Luftrakel) und dann wird per Walzenrakel der Deckstrich 9/I) aufgetragen; Fahrbedingungen analog 2/III). Gesamtauflage: 35 g/m³

| Wasserdichtigkeit: | |
|---|---|
| -Original | 1600 mm WS |
| -30° C-Wäsche | 1300 " " |
| -Chemischreinigung | 1100 " " |

Wasserdampfdurchlässigkeit: 7 mg/cm³h
Scrubb-Test, 1000 Hübe, naß: ohne Beschädigung

Beispiel 10

I) Grundstrich

Streichpaste gemäß Beispiel 2/I)

II) Deckstrich

1785 g eines Polyesters aus Diethylenglykol und Adipinsäure der OH-Zahl 44, 170 g eines α,ω-Bishydroxymethyl-polydimethylsiloxans der OH-Zahl 99 und 88 g Perfluoroctansulfonsäure-N,N-bis-(2-hydroxyethyl-)amid werden nach dem Entwässern bei 110°C mit 710 g Isophorondiisocyanat umgesetzt, bis ein NCO-Wert von 6,4 % erreicht ist. Die Prepolymerschmelze wird in 3650 g Toluol gelöst und auf 25°C abgekühlt. Anschließend tropft man eine Lösung von 374 g Isophorondiamin in 3650 g Isobutanol zu. Nach Erreichen einer Viskosität von 30.000 mPas wird mit 20 g Butanonoxim abgestoppt und 2 h bei 50°C nachgerührt. Man erhält eine 30 %ige Polyurethanharnstofflösung mit einer Viskosität (25°C) von 35.000 mPas. 810 g dieser Lösung werden mit 165 g Toluol verdünnt und mit 25 g der unter 1/II) beschriebenen wäßrigen Melaminharzlösung und 5 g des unter 3/II) beschriebenen Siliconharzes versetzt. Anschließend rührt man eine wäßrige Losung aus 6 g handelsüblicher Carboxymethylcellulose (Walocel® MT 4000 GB, Wolff-Walsrode AG), 12 g Triethanolamin und 82 g Wasser ein und gibt dann unter hochtourigem Rühren 750 g Wasser zu. Die ca. 15 %ige Streichpaste hat eine Viskosität (25°C) von ca. 10.000 mPas.

Mit der Grundstrichpaste 2/I) und der Deckstrichpaste 10/I) lassen sich nach dem Direktbeschichtungsverfahren auf Geweben aus Natur- und Synthesefasern wasserdampfdurchlässige Beschichtungen herstellen.
Wasserdampfdurchlässigkeit: 5-10 mg/$cm^3$h
Wasserdichtigkeit: > 1000 mm WS

Beispiel 11

I) Grundstrich

900 g eines Polytetramethylenglykolpolyethers der OH-Zahl 112 und 56 g eines α,ω-Bishydroxymethyl-polydimethylsiloxans der OH-Zahl 200 werden entwässert und anschließend bei 100°C mit 625 g 4,4'-Diisocyanato-diphenylmethan bis zu einem NCO-Wert von 7,9 % umgesetzt. man verdünnt mit 800 g Methylethylketon, gibt 74,5 g Ethylenglykol zu und rührt bei 80°C, bis ein NCO-Wert von 1,0 % erreicht ist. Dann wird mit weiteren 2850 g Methylethylketon verdünnt und auf 25°C abgekühlt. Bei dieser Temperatur tropft man eine Lösung von 15 g Hydrazinhydrat in 250 g Wasser zu und rührt dann 3 h bei 50°C nach. Es entsteht eine trübe, aber homogene Lösung mit einem Feststoffgehalt von 30 % und einer Viskosität (25°C) von ca. 20.000 mPas. Die daraus analog 1/II) bereitete Grundstrichpaste hat einen Festkörpergehalt von ca. 15 % und eine Viskosität (25°C) von ca. 10.000 mPas.

II) Deckstrich

2240 g eines entwässerten Polyesters aus Butandiol-1,4 und Adipinsäure der OH-Zahl 50 werden in einer Reaktionsschnecke mit 666 g Isophorondiisocyanat und 340 g Isophorondiamin bei Temperaturen zwischen 80 und 180°C umgesetzt. Der extrudierte Schmelzstrang wird nach Kühlung granuliert.
300 g dieses Polyurethanharnstoff-Granulats werden in 350 g Toluol und 350 g Isobutanol gelöst; die 30 %ige Lösung hat eine Viskosität (25°C) von 35.000 mPas.

300 g dieser Lösung werden mit 510 g der Polyurethanharnstoff-Lösung gemäß Beispiel 1/I) und 165 g Toluol vermischt, Dann fügt man 20 g der unter 1/II) beschriebenen Melaminharz-Lösung und 5 g der unter 1/III) beschriebenen Fluorcarbonharz-Lösung hinzu. Weiterhin gibt man unter gutem Rühren nacheinander 100 g der unter 1/II) beschriebenen neutralisierten wäßrigen Polyacrylsäure-Dispersion und 750 g Wasser zu. Die so erhaltene Deckstrichpaste hat eine Viskosität (25°C) von ca. 12.000 mPas bei einem Feststoffgehalt von ca. 15 %.

Mit der Grundstrichpaste 11/I) und der Deckstrichpaste 11/II) lassen sich nach der in Beispiel 1 angegebenen Verfahrensweise auf Geweben aus Natur- und Synthesefasern wasserdampfdurchlässige Beschichtungen herstellen.
Wasserdampfdurchlässigkeit: 7-10 mg/$cm^2$h
Wasserdichtigkeit: > 1200 mm WS

Beispiel 12

I) Grundstrich

1000 g der in Beispiel 5/I beschriebenen 30 %igen Polyurethanlösung werden mit 50 g Toluol und 50 g Isobutanol verdünnt. Zu dieser verdünnten Lösung fügt man 20 g des unter 1/II beschriebenen, blockierten Polyisocyanats und 15 g eines in 1/II beschriebenen Melaminharzes. Weiterhin fügt man 100 g einer 40 %igen Polyacrylatlösung in Ethylacetat (Co-Polymerisat aus 95 Gew.-% Acrylsäureethylester, 2,5 Gew.-% Acrylsäure und 2,5 Gew.-% Acrylsäure-β-hydroxypropylester), 10 g einer 20 %igen Lösung von p-Toluolsulfonsäure in Isopropanol und 100 g einer wäßrigen Ammoniaklösung (10 Gew.-% Ammoniak conc., 90 Gew.-% Wasser) hinzu. Durch Einarbeitung von 700 g Wasser erhält man schließlich eine zweiphasige Streichpaste mit einer Viskosität von ca. 18000 mPa.s/25 ° C.

II) Deckstrich

1000 g der in Beispiel 5/II beschriebenen, 30 %igen Polyurethanlösung werden wie in 12/I/Grundstrich beschrieben, mit 50 g Toluol und 50 g Isobutanol verdünnt. Zu dieser Lösung fügt man 20 g des in Beispiel 1/II beschriebenen Melaminharzes, 50 g des in 12/I/Grundstrich beschriebenen 40 %igen Polyacrylatlösung in Ethylacetat, 10 g einer 20 %igen Lösung von p-Toluolsulfonsäure in Isopropanol und 100 g einr wäßrigen Ammoniaklösung wie in 12/I/Grundstrich beschrieben zu. Nach anteiligem Einrühren von 900 g Wasser erhält man eine viskose, zweiphasige Streichpaste mit einer Viskosität von 15000 mPa.s/25 ° C.

III) Direktbeschichtung

Analog Beispiel 3/III wird ein Polyestergewebe mit der Streichpaste 12/I grundiert und mit der Deckstrichpaste 12/II weiterbeschichtet.
Gesamtauflage: 35 g/m$^2$

| Wasserdichtigkeit: | |
|---|---|
| -Original | 2000 mm WS |
| -30 ° C-Wäsche 1 x | 1600 mm WS |
| -Chemischreinigung 1 x | 1200 mm WS |

Wasserdampfdurchlässigkeit: 8 mg/cm$^2$ x h Scrubb-Test, 1000 Hübe, naß: ohne Beschädigung

Beispiel 13

I) Grundstrich

1000 g der in Beispiel 5/I beschriebenen 30 %igen Polyurethanlösung werden mit 50 Toluol in 50 g Isobutanol verdünnt. Zu dieser verdünnten Lösung fügt man 20 g des unter 1/II beschriebenen, blockierten Polyisocyanats und 15 g eines in 1/II beschriebenen Melaminharzes. Weiterhin fügt man 10 g einer 20 %igen Lösung von p-Toluolsulfonsäure in Isopropanol und 100 g einer wäßrigen Ammoniaklösung (10 Gew.-% Ammoniak conc. + 90 Gew.-% Wasser) hinzu. Durch Einarbeiten von 700 g Wasser erhält man schließlich eine zweiphasige Streichpaste mit einer Viskosität von 20.000 mPas/25 ° C.

II) Deckstrich

1000 g der in Beispiel 5/II beschriebenen 30 %igen Polyurethanlösung werden wie in 12/I beschrieben mit 50 g Toluol und 50 g Isobutanol verdünnt. Zu dieser Lösung fügt man 20 g des in Beispiel 1/II beschriebenen Melaminharzes, 10 g einer 20 %igen Lösung von p-Toluolsulfonsäure in Isopropanol und 100 g einer wäßrigen Ammoniaklösung wie in 12/I. Nach anteiligen Einrühren von 100 g Wasser erhält man eine viskose zweiphasige Streichpaste mit einer Viskosität von ca. 18.000 mPas bei 25 ° C.

III) Direktbeschichtung

Analog Beispiel 3/IIIc wird ein Polyestergewebe mit der Streichpaste 13/I grundiert und mit Deckstrichpaste 13/II weiter beschichtet.
Gesamtauflage: 35 g/$m^2$

| Wasserdichtigkeit: | |
|---|---|
| - Original | 2000 mm WS |
| - 30 ° C-Wäsche 1 x | 1800 mm WS |
| - Chemischreinigung 1 x | 1000 mm WS |

Wasserdampfdurchlässigkeit: 4 mg/$cm^2$ h
Scrubb-Test, 1000 Hübe, naß: ohne Beschädigung

Beispiel 14

I) Grundpaste

Streichpaste gemäß Beispiel 12/I

II) Deckstrich

1000 g der im Beispiel 8/II beschriebenen 30 %igen Polyurethanlösung werden mit 50 g Toluol und 50 g Isobutanol verdünnt. Zu dieser Lösung fügt man 20 g des in Beispiel 1/II beschriebenen Melaminharzes und 10 g einer 20 %igen Lösung von p-Toluolsulfonsäure und 100 g einer wäßrigen Ammoniaklösung wie in 12/I. Nach anteiligem Einrühren von 900 g Wasser erhält man eine viskose, zweiphasige Streichpaste mit einer Viskosität von ca. 18.000 mPas/25 ° C.

III) Direktbeschichtung

Analog Beispiel 3/III wird ein Polyestergewebe mit der Streichpaste 14/I grundiert und mit der Deckstrichpaste 14/II weiterbehandelt.
Gesamtauflage: 30 g/$m^2$

| Wasserdichtigkeit: | |
|---|---|
| - Original | 1800 mm WS |
| - 30 ° C-Wäsche 1 x | 1500 mm WS |
| - Chemischreingung 1 x | 1000 mm WS |

Wasserdampfdurchlässigkeit: 6 mg/$cm^2$ h
Scrubb-Test, 1000 Hübe, naß: ohne Beschädigung

**Patentansprüche**

**1.** Verfahren zur Herstellung von wasserdampfdurchlässigen Beschichtungen auf Textil- oder Ledersubstraten im Direkt- oder Transferverfahren nach dem Prinzip der Verdampfungskoagulation unter Verwendung von Polyurethan-Kunststoffe enthaltenden, gegebenenfalls pigmentierten Streichpasten, dadurch gekennzeichnet, daß als Streichpasten mehrphasige Gemische aus
A) 5 - 50 Gew.-% an sich hydrophoben Polyurethanen und/oder Polyurethanharnstoffen mit weniger als 2 Gew.-% Oxyethylensegmenten, die
1 - 30 Gew.-% Aufbaukomponenten aus der Gruppe
der Silikonharze,
der aromatische Molekülsegmente enthaltenden Polyether, welche weniger als 10 Gew.-% Oxyethylensegmente aufweisen, oder Polyester
und/oder der Perfluorcarbonharze,

eingebaut enthalten,

B) 0 - 30 Gew.-% an sich hydrophoben Polyurethanen und/oder Polyurethanharnstoffen, die ohne die unter A) genannten, speziellen Aufbaukomponenten aufgebaut sind,

c) 4,5 - 50 Gew.-% an organischen Lösungsmitteln für A) und B),

D) 0 - 40 Gew.-% an organischen Nichtlösungsmitteln für A) und B),

E) 0 - 10 Gew.-%, bevorzugt 0,5 - 5 Gew.-%, an Polymeren, die frei von Urethan- und Harnstoffgruppen sind und mit Basen ganz oder teilweise neutralisierte Carboxylgruppen tragen,

F) 10 - 70 Gew.-% Wasser und

G) 0 - 5 Gew.-% an Vernetzungsmitteln, Hydrophobierungsmitteln, Stabilisatoren und/oder weiteren Beschichtungshilfsmitteln

verwendet werden, wobei sich die Summe der Komponenten A bis G auf 100 Gew.-% ergänzt.

**2.** Verfahren gemäß Anspruch 1, dadurch gekennzeichnet, daß die Polyurethane bzw. Polyurethanharnstoffe A) 1-20 Gew.-% an Polysiloxan-Segmente enthaltenden Verbindungen mit mindestens zwei end- und/oder seitenständigen, gegenüber Isocyanaten reaktionsfähigen Gruppen als Aufbaukomponenten enthalten.

**3.** Verfahren gemäß Anspruch 1, dadurch gekennzeichnet, daß die Polyurethane bzw. Polyurethanharnstoffe A) 1-20 Gew.-% an durch Oxalkylierung von aromatischen Verbindungen mit mindestens zwei phenolischen Hydroxylgruppen hergestellten, hydroxyfunktionellen Polyethern als Aufbaukomponenten enthalten, wobei diese Polyether zu weniger als 10 Gew.-% aus Oxyethylen-Segmenten $-CH_2-CH_2-O-$ bestehen.

**4.** Verfahren gemäß Anspruch 1, dadurch gekennzeichnet, daß die Polyurethane bzw. Polyurethanharnstoffe A) 1-20 Gew.-% an Polyestern der isomeren Phthalsäuren mit mindestens zwei end- und/oder seitenständigen Hydroxylgruppen als Aufbaukomponenten enthalten.

**5.** Verfahren gemäß Anspruch 1, dadurch gekennzeichnet, daß die Polyurethane bzw. Polyurethanharnstoffe A) 1-20 Gew.-% an Perfluoralkylgruppen enthaltenden Verbindungen mit mindestens zwei end- und/oder seitenständigen, gegenüber Isocyanaten reaktionsfähigen Gruppen als Aufbaukomponenten enthalten.

**6.** Verfahren nach Anspruch 1 bis 5, dadurch gekennzeichnet, daß die Polyurethane bzw. Polyurethanharnstoffe A) zwei oder mehrere Aufbaukomponenten aus der Gruppe Siliconharze, aromatische Molekülsegmente enthaltende Polyether mit weniger als 10 Gew.-% Oxyethylensegmenten, aromatische Molekülsegmente enthaltende Polyester und Perfluorcarbonharze in einer Gesamtmenge von 1-20 Gew.-% enthalten.

**7.** Verfahren gemäß Anspruch 1 bis 6, dadurch gekennzeichnet, daß die organischen Lösungsmittel C) Alkohole und/oder Ketone mit jeweils 4 bis 6 Kohlenstoffatomen sind und daß die organischen Nichtlösungsmittel D) aromatische und/oder aliphatische Kohlenwasserstoffe mit 6 - 12 Kohlenstoffatomen und/oder Fettsaureester mit 3-7 Kohlenstoffatomen sind.

**8.** Verfahren gemaß Anspruch 1 bis 7, dadurch gekennzeichnet, daß die von Urethan- und Harnstoffgruppen freien Polymeren E) homo- oder copolymere Polyacryl-und/oder Polymethacrylsäuren und/oder Carboxylgruppen enthaltende Cellulosederivate sind, deren Carboxylgruppen mit Basen ganz oder teilweise neutralisiert sind.

**9.** Verfahren gemäß Anspruch 1 bis 8, dadurch gekennzeichnet, daß man als Streichpasten mehrphasige, stabile Gemische aus

A) 5-30 Gew.-% an sich hydrophoben Polyurethanharnstoffen, die aus

1) 10-40 Gew.-% aliphatischen Polyisocyanaten und

2) mindestens 40 Gew.-% aliphatischen Polyhydroxylverbindungen vom Molekulargewicht 500 - 5000 und

3a) 0-15 Gew.-% Dihydroxymethylpolydimethylsiloxanen vom Molekulargewicht 300 - 3000 und/oder

3b) 0-15 Gew.-% oxalkylierten Bis-(hydroxyphenyl)-alkanen vom Molekulargewicht 300 - 2000 mit weniger als 10 Gew.-% Oxyethylen-Segmenten $-CH_2-CH_2-O-$ und/oder

3c) 0-15 Gew.-% mindestens zwei end- und/oder seitenständige Hydroxylgruppen aufweisenden Polyestern der isomeren Phthalsäuren vom Molekulargewicht 250 - 2000 und/oder

3d) 0-15 Gew.-% Diolen mit mindestens drei perfluorierte Kohlenstoffatome enthaltenden Perfluoralkylgruppen vom Molekulargewicht 300 - 2000,

wobei die Summe der Prozentanteile der Aufbaukomponenten 3a) bis 3d) 1-20 % beträgt, und

4a) 0-20 Gew.-% Polyhydroxylverbindungen vom Molekulargewicht 62 - 399 und

4b) 2-20 Gew.-% Polyaminen und/oder Hydrazin und/oder Hydrazinderivaten vom Molekulargewicht 32, sowie 60 bis 399 und

5) 0-5 Gew.-% an sonstigen Aufbaukomponenten

hergestellt sind,

B) gegebenenfalls 0-30 Gew.-% an an sich hydrophoben Polyurethanen und/oder Polyurethanharnstoffen, die ohne die unter A) genannten, speziellen Aufbaukomponenten 3a)-3d) hergestellt sind,

C) mindestens 5 Gew.-% Alkoholen und/oder Ketonen mit jeweils 4-6 Kohlenstoffatomen,

D) 4,5-40 Gew.-% aromatischen und/oder aliphatischen Kohlenwasserstoffen mit 6-12 Kohlenstoffatomen und/oder Fettsäureestern mit 3-7 Kohlenstoffatomen,

E) 0-10 Gew,-%, bevorzugt 0,5-5 Gew.-%, ganz oder teilweise mit Basen neutralisierten Poly(meth-)-acrylsäuren und/oder (Meth-)Acrylsäure-Copolymerisaten

F) 20-60 Gew.-% Wasser und

G) 0-5 Gew.-% Vernetzungsmitteln, Hydrophobierungsmitteln, Stabilisatoren und/oder weiteren Beschichtungshilfsmitteln verwendet.

**10.** Streichpasten, in Form mehrphasiger, stabiler Gemische aus

A) 5-30 Gew.-% an sich hydrophoben Polyurethanharnstoffen mit weniger als 2 Gew.-% Oxyethylensegmenten, die aus

1) 10-40 Gew.-% aliphatischen Polyisocyanaten und

2) mindestens 40 Gew.-% aliphatischen Polyhydroxylverbindungen vom Molekulargewicht 500 - 5000 und

3a) 0-15 Gew.-% Dihydroxymethylpolydimethylsiloxanen vom Molekulargewicht 300 - 3000 und/oder

3b) 0-15 Gew.-% oxalkylierten Bis-(hydroxyphenyl)-alkanen vom Molekulargewicht 300 - 2000 mit weniger als 10 Gew.-% Oxyethylen-Segmenten $-CH_2-CH_2-O-$ und/oder

3c) 0-15 Gew.-% mindestens zwei end- und/oder seitenständige Hydroxylgruppen aufweisenden Polyestern der isomeren Phthalsäuren vom Molekulargewicht 250 - 2000 und/oder

3d) 0-15 Gew.-% Diolen mit mindestens drei perfluorierte Kohlenstoffatomen enthaltenden Perfluoralkylgruppen vom Molekulargewicht 300 - 2000,

wobei die Summe der Prozentanteile der Aufbaukomponenten 3a) bis 3d) 1-20 % beträgt, und

4a) 0-20 Gew.-% Polyhydroxylverbindungen vom Molekulargewicht 62 - 399 und

4b) 2-20 Gew.-% Polyaminen und/oder Hydrazin und/oder Hydrazinderivaten vom Molekulargewicht 32 sowie 62 bis 399 und

5) 0-5 Gew.-% an sonstigen Aufbaukomponenten

hergestellt sind,

B) gegebenenfalls 0-30 Gew.-% an an sich hydrophoben Polyurethanen und/oder Polyurethanharnstoffen, die ohne die unter A) genannten, speziellen Aufbaukomponenten 3a)-3d) hergestellt sind,

C) 4,5-40 Gew.-% Alkoholen und/oder Ketonen mit jeweils 4-6 Kohlenstoffatomen,

D) mindestens 5 Gew.-% aromatischen und/oder aliphatischen Kohlenwasserstoffen mit 6-10 Kohlenstoffatomen und/oder Fettsäureestern mit 3-7 Kohlenstoffatomen,

E) 0,5-5 Gew.-% ganz oder teilweise mit Basen neutralisierten Poly(meth-)-acrylsäuren und/oder (Meth-)Acrylsäure-Copolymerisaten

F) 20-60 Gew.-% Wasser und

G) 0-5 Gew.-% Vernetzungsmitteln, Hydrophobierungsmitteln, Stabilisatoren und/oder

weiteren Beschichtungshilfsmitteln, wobei sich die Summe der Komponenten A bis G auf 100 Gew.-% ergänzt.

## Claims

**1.** Process for the preparation of water vapour-permeable coatings on textile or leather substrates by the direct or transfer process in accordance with the principle of evaporative coagulation using optionally pigmented spreading pastes containing polyurethane plastics, characterised in that the spreading

pastes used are multiphase mixtures of

A) 5 - 50% by weight of polyurethanes and/or polyurethane-ureas which are hydrophobic per se and have less than 2% by weight of oxyethylene segments, containing 1 - 30% by weight of incorporated structural components from the group comprising

silicone resins,

aromatic molecular segment-containing polyethers which contain less than 10% by weight of oxyethylene segments, or polyesters

and/or perfluorocarbon resins,

B) 0 - 30% by weight of polyurethanes and/or polyurethane-ureas which are hydrophobic per se and are built up without the specific structural components mentioned under A),

C) 4.5 - 50% by weight of organic solvents for A) and B),

D) 0 - 40% by weight of organic non-solvents for A) and B),

E) 0 - 10% by weight, preferably 0.5 - 5% by weight, of polymers which are free from urethane and urea groups and carry carboxyl groups which are completely or partly neutralised with bases,

F) 10 - 70% by weight of water and

G) 0 - 5% by weight of crosslinking agents, hydrophobising agents, stabilisers and/or other coating auxiliaries,

the sum of components A to G adding up to 100% by weight.

**2.** Process according to Claim 1, characterised in that the polyurethanes and/or polyurethane-ureas A) contain, as structural components, 1-20% by weight of compounds which contain polysiloxane segments and have at least two terminal and/or lateral groups which are reactive towards isocyanates.

**3.** Process according to Claim 1, characterised in that the polyurethanes and/or polyurethane-ureas A) contain, as structural components, 1-20% by weight of hydroxy-functional polyethers prepared by oxyalkylation of aromatic compounds having at least two phenolic hydroxyl groups, these polyethers consisting of oxyethylene segments $-CH_2-CH_2-O-$ to the extent of less than 10% by weight.

**4.** Process according to Claim 1, characterised in that the polyurethanes and/or polyurethane-ureas A) contain, as structural components, 1-20% by weight of polyesters of isomeric phthalic acids having at least two terminal and/or lateral hydroxyl groups.

**5.** Process according to Claim 1, characterised in that the polyurethanes and/or polyurethane-ureas A) contain, as structural components, 1-20% by weight of compounds which contain perfluoroalkyl groups and have at least two terminal and/or lateral groups which are reactive towards isocyanates.

**6.** Process according to Claim 1 to 5, characterised in that the polyurethanes and/or polyurethane-ureas A) contain two or more structural components from the group comprising silicone resins, aromatic molecular segment-containing polyethers having less than 10% by weight of oxyethylene segments, aromatic molecular segment-containing polyesters and perfluorocarbon resins in a total amount of 1-20% by weight.

**7.** Process according to Claim 1 to 6, characterised in that the organic solvents C) are alcohols and/or ketones having in each case 4 to 6 carbon atoms, and in that the organic non-solvents D) are aromatic and/or aliphatic hydrocarbons having 6 - 12 carbon atoms and/or fatty acid esters having 3-7 carbon atoms.

**8.** Process according to Claim 1 to 7, characterised in that the polymers E) which are free from urethane and urea groups are homo- or copolymeric polyacrylic and/or polymethacrylic acids and/or cellulose derivatives containing carboxyl groups, the carboxyl groups of which are completely or partly neutralised with bases.

**9.** Process according to Claim 1 to 8, characterised in that the spreading pastes used are multiphase, stable mixtures of

A) 5-30% by weight of polyurethane-ureas which are hydrophobic per se and are prepared from

1) 10-40% by weight of aliphatic polyisocyanates and

2) at least 40% by weight of aliphatic polyhydroxyl compounds of molecular weight 500 - 5000 and

3a) 0-15% by weight of dihydroxymethylpolydimethylsiloxanes of molecular weight 300 - 3000 and/or

3b) 0-15% by weight of oxyalkylated bis-(hydroxyphenyl)-alkanes of molecular weight 300 - 2000 having less than 10% by weight of oxyethylene segments $-CH_2-CH_2-O-$ and/or

3c) 0-15% by weight of polyesters of isomeric phthalic acids of molecular weight 250 - 2000 which contain at least two terminal and/or lateral hydroxyl groups and/or

3d) 0-15% by weight of diols of molecular weight 300 - 2000 having perfluoroalkyl groups containing at least three perfluorinated carbon atoms,

the sum of the percentage proportions of structural components 3a) to 3d) being 1-20%, and

4a) 0-20% by weight of polyhydroxyl compounds of molecular weight 62 to 399 and

4b) 2-20% by weight of polyamines and/or hydrazine and/or hydrazine derivatives of molecular weight 32, and 62 to 399 and

5) 0-5% by weight of other structural components,

B) if appropriate 0-30% by weight of polyurethanes and/or polyurethane-ureas which are hydrophobic per se and are prepared without the specific structural components 3a)-3d) mentioned under A),

C) at least 5% by weight of alcohols and/or ketones having in each case 4-6 carbon atoms,

D) 4.5-40% by weight of aromatic and/or aliphatic hydrocarbons having 6-12 carbon atoms and/or fatty acid esters having 3-7 carbon atoms,

E) 0-10% by weight, preferably 0.5-5% by weight, of poly(meth)acrylic acids and/or (meth)acrylic acid copolymers which are completely or partly neutralised with bases

F) 20-60% by weight of water and

G) 0-5% by weight of crosslinking agents, hydrophobising agents, stabilisers and/or other coating auxiliaries.

**10.** Spreading pastes in the form of multiphase, stable mixtures of

A) 5-30% by weight of polyurethane-ureas which are hydrophobic per se, contain less than 2% by weight of oxyethylene segments and are prepared from

1) 10-40% by weight of aliphatic polyisocyanates and

2) at least 40% by weight of aliphatic polyhydroxy compounds of molecular weight 500 - 5000 and

3a) 0-15% by weight of dihydroxymethylpolydimethylsiloxanes of molecular weight 300 - 3000 and/or

3b) 0-15% by weight of oxyalkylated bis-(hydroxyphenyl)-alkanes of molecular weight 300 - 2000 having less than 10% by weight of oxyethylene segments $-CH_2-CH_2-O-$ and/or

3c) 0-15% by weight of polyesters of isomeric phthalic acids of molecular weight 250 - 2000 which contain at least two terminal and/or lateral hydroxyl groups and/or

3d) 0-15% by weight of diols of molecular weight 300 - 2000 having perfluoroalkyl groups containing at least three perfluorinated carbon atoms,

the sum of the percentage proportions of structural components 3a) to 3d) being 1-20%, and

4a) 0-20% by weight of polyhydroxy compounds of molecular weight 62 to 399 and

4b) 2-20% by weight of polyamines and/or hydrazine and/or hydrazine derivatives of molecular weight 32, and 62 to 399 and

5) 0-5% by weight of other structural components,

B) if appropriate 0-30% by weight of polyurethanes and/or polyurethane-ureas which are hydrophobic per se and are prepared without the specific structural components 3a)-3d) mentioned under A),

C) 4.5-40% by weight of alcohols and/or ketones having in each case 4-6 carbon atoms,

D) at least 5% by weight of aromatic and/or aliphatic hydrocarbons having 6-10 carbon atoms and/or fatty acid esters having 3-7 carbon atoms,

E) 0.5-5% by weight of poly(meth)acrylic acids and/or (meth)acrylic acid copolymers which are completely or partly neutralised with bases

F) 20-60% by weight of water and

G) 0-5% by weight of crosslinking agents, hydrophobising agents, stabilisers and/or other coating auxiliaries,

the sum of components A to G adding up to 100% by weight.

## Revendications

**1.** Procédé pour former des revêtements perméables à la vapeur d'eau sur des substrats de matière textile ou de cuir par le procédé direct ou le procédé par transfert selon le principe de la coagulation par évaporation, avec utilisation de pâtes à enduire éventuellement pigmentées, contenant des matières plastiques à base de polyuréthanne, caractérisé en ce qu'on utilise comme pâtes à enduire des mélanges à plusieurs phases formés de

A) 5 à 50 % en poids de polyuréthannes et/ou de polyuréthanne-urées de propre caractère hydrophobe portant moins de 2 % en poids de segments oxyéthylène, qui contiennent, incorporés, 1 à 30 % en poids de composants structuraux du groupe,
des résines de silicone,
des polyéthers contenant des segments moléculaires aromatiques qui présentent moins de 10 % en poids de segments oxyéthylène ou
des polyesters
et/ou des résines perfluorocarbonées,
B) de 0 à 30 % en poids de polyuréthannes et/ou de polyuréthanne-urées de propre caractère hydrophobe, qui sont incorporés sans les composants structuraux spéciaux mentionnés en A),
C) de 4,5 à 50 % en poids de solvants organiques pour A) et B),
D) de 0 à 40 % en poids de non-solvants organiques pour A) et B),
E) de 0 à 10 % en poids, de préférence de 0,5 à 5 % en poids de polymères qui sont dépourvus de groupes uréthanne et urée et qui portent des groupes carboxyle totalement ou partiellement neutralisés avec des bases,
F) de 10 à 70 % en poids d'eau et
G) de 0 à 5 % en poids d'agents réticulants, d'agents conférant le caractère hydrophobe, de stabilisants et/ou d'autres substances auxiliaires de revêtement, la somme des composants A) à G) représentant 100 % en poids.

**2.** Procédé suivant la revendication 1, caractérisé en ce que les polyuréthannes et les polyuréthanne-urées A) contiennent comme composants structuraux 1 à 20 % en poids de composés contenant des segments polysiloxane, porteurs d'au moins deux groupes terminaux et d'au moins deux groupes latéraux aptes à réagir vis-à-vis d'isocyanates.

**3.** Procédé suivant la revendication 1, caractérisé en ce que les polyuréthannes et les polyuréthanne-urées A) contiennent comme composants structuraux 1 à 20 % en poids de polyéthers à fonctionnalité hydroxy produits par oxalkylation de composés aromatiques portant au moins deux groupes hydroxyle phénoliques, ces polyéthers étant constitués en proportion de moins de 10 % en poids de segments oxyéthylène $-CH_2-CH_2-O-$.

**4.** Procédé suivant la revendication 1, caractérisé en ce que les polyuréthannes et les polyuréthanne-urées A) contiennent comme composants structuraux 1 à 20 % en poids de polyesters des acides phtaliques isomères portant au moins deux groupes hydroxyle terminaux et/ou latéraux.

**5.** Procédé suivant la revendication 1, caractérisé en ce que les polyuréthannes et les polyuréthanne-urées A) contiennent comme composants structuraux 1 à 20 % en poids de composés porteurs de groupes perfluoralkyle avec au moins deux groupes terminaux et/ou latéraux aptes à réagir vis-à-vis d'isocyanates.

**6.** Procédé suivant les revendications 1 à 5, caractérisé en ce que les polyuréthannes et polyuréthanne-urées A) contiennent deux ou plus de deux composants structuraux du groupe des résines de silicones, des polyéthers contenant des segments moléculaires aromatiques avec moins de 10 % en poids de segments oxyéthylène, des polyesters contenant des segments moléculaires aromatiques et des résines perfluorocarbonées en une quantité totale de 1 à 20 % en poids.

**7.** Procédé suivant les revendications 1 à 6, caractérisé en ce que les solvants organiques C) sont des alcools et/ou des cétones ayant dans chaque cas 4 à 6 atomes de carbone et en ce que les non-solvants organiques D) sont des hydrocarbures aromatiques et/ou aliphatiques ayant 6 à 12 atomes de carbone et/ou des esters d'acides gras de 3 à 7 atomes de carbone.

**8.** Procédé suivant les revendications 1 à 7, caractérisé en ce que les polymères E) dépourvus de groupes uréthanne et urée sont des acides polyacryliques et/ou polyméthacryliques homopolymères ou copolymères et/ou des dérivés cellulosiques contenant des groupes carboxyle, dont les groupes carboxyle sont neutralisés totalement ou partiellement avec des bases.

**9.** Procédé suivant les revendications 1 à 8, caractérisé en ce qu'on utilise comme pâtes à enduire des mélanges stables de plusieurs phases constitués
A) de 5 à 30 % en poids de polyuréthanne-urées hydrophobes qui sont produites à partir
1) de 10 à 40 % en poids de polyisocyanates aliphatiques et
2) d'au moins 40 % en poids de composés polyhydroxyliques aliphatiques ayant un poids moléculaire de 500 à 5000 et
3a) de 0 à 15 % en poids de dihydroxyméthylpolydiméthylsiloxanes ayant un poids moléculaire de 300 à 3000 et/ou
3b) de 0 à 15 % en poids de bis-(hydroxyphényl)alcanes oxalkylés ayant un poids moléculaire de 300 à 2000 avec moins de 10 % en poids de segments oxyéthylène $-CH_2-CH_2-O-$ et/ou
3c) de 0 à 15 % en poids de polyesters présentant au moins deux groupes hydroxyle terminaux et/ou latéraux des acides phtaliques isomères ayant un poids moléculaire de 250 à 2000 et/ou
3d) de 0 à 15 % en poids de diols porteurs de groupes perfluoralkyle contenant au moins 3 atomes perfluorés de carbone, d'un poids moléculaire de 300 à 2000,
la somme des pourcentages des composants constitutifs 3a) à 3d) s'élevant à 1-20 %, et
4a) de 0 à 20 % en poids de composés polyhydroxyliques d'un poids moléculaire de 62 à 399 et
4b) de 2 à 20 % en poids de polyamines et/ou d'hydrazine et/ou de dérivés d'hydrazine d'un poids moléculaire égal à 32, ainsi qu'à 60-399 et
5) de 0 à 5 % en poids d'autres composants constitutifs,
B) le cas échéant, de 0 à 30 % en poids de polyuréthannes et/ou de polyuréthanne-urées de propre caractère hydrophobe, qui sont produits sans les composants constitutifs spéciaux 3a)-3d) mentionnés en A),
C) d'au moins 5 % en poids d'alcools et/ou de cétones ayant chacun 4 à 6 atomes de carbone,
D) de 4,5 à 40 % en poids d'hydrocarbures aromatiques et/ou aliphatiques ayant 6 à 12 atomes de carbone et/ou d'esters d'acides gras ayant 3 à 7 atomes de carbone,
E) de 0 à 10 % en poids, de préférence de 0,5 à 5 % en poids de polymères d'acides (méth)acryliques et/ou de copolymères d'acides (méth)acryliques totalement ou partiellement neutralisés avec des bases
F) de 20 à 60 % en poids d'eau et
G) de 0 à 5 % en poids d'agents de réticulation, d'agents conférant le caractère hydrophobe, d'agents stabilisants et/ou d'autres substances auxiliaires d'enduction.

**10.** Pâtes à enduire, sous forme de mélanges stables à plusieurs phases, constitués
A) de 5 à 30 % en poids de polyuréthanne-urées hydrophobes avec moins de 2 % en poids de segments oxyéthylène, qui sont produits à partir
1) de 10 à 40 % en poids de polyisocyanates aliphatiques et
2) d'au moins 40 % en poids de composés polyhydroxyliques aliphatiques d'un poids moléculaire de 500 à 5000,
3a) de 0 à 15 % en poids de dihydroxyméthylpolydiméthylsiloxanes d'un poids moléculaire de 300 à 3000 et/ou
3b) de 0 à 15 % en poids de bis-(hydroxyphényl)alcanes oxalkylés d'un poids moléculaire de 300 à 2000 avec moins de 10 % en poids de segments oxyéthylène $-CH_2-CH_2-O-$ et/ou
3c) de 0 à 15 % en poids de polyesters, porteurs d'au moins deux groupes hydroxyle terminaux et/ou latéraux, des acides phtaliques isomères ayant un poids moléculaire de 250 à 2000 et/ou
3d) de 0 à 15 % en poids de diols porteurs de groupes perfluoralkyle contenant au moins 3 atomes perfluorés de carbone, d'un poids moléculaire de 300 à 2000,
la somme des pourcentages des composants constitutifs 3a) à 3d) s'élevant à 1-20 %, et
4a) de 0 à 20 % en poids de composés polyhydroxyliques d'un poids moléculaire de 62 à 399 et
4b) de 2 à 20 % en poids de polyamines et/ou d'hydrazine et/ou de dérivés d'hydrazine d'un poids moléculaire de 32, ainsi que de 62 à 399 et
5) de 0 à 5 % en poids d'autres composants structuraux,
B) le cas échéant, de 0 à 30 % en poids de polyuréthannes et/ou de polyuréthanne-urées à propre caractère hydrophobe, qui sont produits sans les composants structuraux 3a)-3d) spéciaux mentionnés en A),

C) de 4,5 à 40 % en poids d'alcools et/ou de cétones ayant chacun 4 à 6 atomes de carbone,

D) d'au moins 5 % en poids d'hydrocarbures aromatiques et/ou aliphatiques ayant 6 à 10 atomes de carboné et/ou d'esters d'acides gras ayant 3 à 7 atomes de carbone,

E) de 0,5 à 5 % en poids de polymères d'acides (méth)acryliques et/ou de copolymères d'acides (méth)acryliques totalement ou partiellement neutralisés avec des bases

F) de 20 à 60 % en poids d'eau et

G) de 0 à 5 % en poids d'agents de réticulation, d'agents conférant le caractère hydrophobe, d'agents stabilisants et/ou d'autres substances auxiliaires d'enduction,

la somme des composants A) à G) s'élevant à 100 % en poids.